# EUROPÄISCHE PATENTSCHRIFT

(11) **EP 3 853 079 B1**
(45) Veröffentlichungstag und Bekanntmachung des Hinweises auf die Patenterteilung: **18.02.2026**
(21) Anmeldenummer: 19774064.0
(22) Anmeldetag: 05.09.2019
(51) Int. Cl.: B60R 21/18, B60R 21/20, B60R 22/26

(54) **SICHERHEITSGURTANORDNUNGEN FÜR EIN KRAFTFAHRZEUG**
SEAT BELT ARRANGEMENTS FOR A MOTOR VEHICLE
SYSTÈMES DE CEINTURE DE SÉCURITÉ CONÇUS POUR UN VÉHICULE AUTOMOBILE

(30) Priorität: 20.09.2018 DE 102018123209
(43) Veröffentlichungstag der Anmeldung: 28.07.2021
(73) Patentinhaber: Joyson Safety Systems Germany GmbH, 63743 Aschaffenburg (DE)
(72) Erfinder: STEINKE, Norman, 10785 Berlin (DE); CLAUSS, Yves, 14482 Potsdam (DE); LEUPOLD, Tibor, 10439 Berlin (DE); HÖFER, Simon, 10963 Berlin (DE); YAN, Mingxi, 10963 Berlin (DE); PAUSCH, Tobias, 10435 Berlin (DE); MAHDI, Koshan, 10967 Berlin (DE); WELLER, Gert, 10243 Berlin (DE)
(74) Vertreter: Maikowski & Ninnemann Patentanwälte Partnerschaft mbB
(86) Internationale Anmeldenummer: PCT/EP2019/073715
(87) Internationale Veröffentlichungsnummer: WO 2020/057992

(56) Entgegenhaltungen:
- DE-A1- 102011 116 146
- DE-A1- 102017 202 644
- DE-A1- 102017 216 180
- US-A1- 2007 080 528

## Beschreibung

Die Erfindung betrifft eine Sicherheitsgurtanordnung für ein Kraftfahrzeug gemäß dem Oberbegriff des Anspruchs 1.

Eine Sicherheitsgurtanordnung mit einem an einem Sicherheitsgurt der Sicherheitsgurtanordnung angeordneten Gassackmodul ist z.B. aus der DE 10 2017 202 644 A1 bekannt. An einem Modulgehäuse ist ein Verriegelungsmechanismus vorgesehen, über den der Sicherheitsgurt mit dem Modulgehäuse koppelbar ist. Durch die Kopplung des Sicherheitsgurtes mit dem Modulgehäuse wird eine Relativbewegung zwischen dem Sicherheitsgurt und dem Gassackmodul unterbunden, so dass das Gassackmodul einer Auszugsbewegung des Sicherheitsgurtes folgt. Um eine Gaseinleitung in den Gassack des Gassackmoduls auch in diesem Fall zu ermöglichen, wird eine Gasleitung mit einer Überlänge verwendet. Die Realisierung einer derartigen Sicherheitsgurtanordnung ist jedoch sehr aufwendig. Weitere Sicherheitsgurtanordnungen sind in der DE 2007/080528 A1 und in der DE 10 2011 116146 A1 beschrieben.

Das der Erfindung zugrunde liegende Problem besteht darin, eine Sicherheitsgurtanordnung mit einem an einem Sicherheitsgurt angeordneten Gassack zu schaffen, die auf möglichst einfache Weise realisierbar ist.

Dieses Problem wird durch die Bereitstellung der Sicherheitsgurtanordnungen mit den Merkmalen des Anspruchs 1 gelöst. Weiterbildungen der Erfindung sind in den abhängigen Ansprüchen angegeben.

Danach wird eine Sicherheitsgurtanordnung für ein Kraftfahrzeug zur Verfügung gestellt, mit
- mindestens einem Sicherheitsgurt zum Schutz eines auf einem Fahrzeugsitz befindlichen Fahrzeuginsassen;
- mindestens einem an dem Sicherheitsgurt angeordneten, zum Schutz des Fahrzeuginsassen aufblasbaren Gassack, wobei
- der Gassack einen Durchgang aufweist, durch den sich der Sicherheitsgurt hindurch erstreckt und an den mindestens eine aufblasbare Kammer des Gassacks angrenzt, wobei bei oder nach einem Aufblasen des Gassacks zumindest ein Teilabschnitt einer Wandung des Durchgangs mittelbar und/oder unmittelbar so gegen den Sicherheitsgurt drückt, dass der Gassack an den Sicherheitsgurt (insbesondere klemmend) ankoppelt und einer Auszugsbewegung des Sicherheitsgurtes und damit einer Bewegung des Fahrzeuginsassen folgt, und wobei der Sicherheitsgurt zumindest innerhalb des Durchgangs zumindest teilweise von einem Hüllelement umgeben ist.

Bei einer Kollision des Fahrzeugs und einer in Folge der Kollision einsetzenden Vorverlagerung des Fahrzeuginsassen folgt der Gassack aufgrund der erfolgten Ankopplung an den Sicherheitsgurt der mit der Vorverlagerung des Fahrzeuginsassen einhergehenden Auszugsbewegung des Sicherheitsgurtes (d.h. einem Abwickeln des Sicherheitsgurtes von einer Aufwickelvorrichtung), so dass sich die Position des aufgeblasenen Gassacks relativ zu dem Fahrzeuginsassen möglichst wenig ändert. Im normalen Betrieb des Fahrzeugs (vor einer Aktivierung des Gassacks) ist jedoch eine Relativbewegung zwischen dem Sicherheitsgurt und dem Gassack möglich; z.B. um ein Anlegen des Sicherheitsgurtes zu erleichtern. Der Gassack ist insbesondere an einem Schulterabschnitt des Sicherheitsgurtes angeordnet, wobei der Sicherheitsgurt zumindest teilweise mit dem Schulterabschnitt durch den Durchgang des Gassacks hindurch verläuft.

Insbesondere entsteht in Folge des Innendrucks in der Kammer eine Flächenpressung zwischen der Kammer (z.B. über Teilabschnitten einer Wandung des Durchgangs) und dem sich in dem (insbesondere nicht mit Gas befüllbaren) Durchgang befindlichen Sicherheitsgurt; und zwar zumindest teilweise mittelbar über das in dem Durchgang angeordnete Hüllelement. Durch diese Flächenpressung erfolgt ein Anklemmen der Kammer und damit des Gassacks an den Sicherheitsgurt.

Der Durchgang (dessen Wandung) ist beispielsweise durch ein flexibles Element ausgebildet, das sich zumindest teilweise durch die Kammer hindurch erstreckt oder an die Kammer angrenzt. Beispielsweise ist das flexible Element schlauchartig ausgeformt und bildet einen tunnelförmigen Durchgang aus. Das flexible Element trennt zum Beispiel ein inneres, beispielsweise nicht aufblasbares Volumen des Durchgangs, durch das der Sicherheitsgurt hindurch verläuft, von einem aufblasbaren Volumen der Kammer. Diese Trennung erfolgt insbesondere gasdicht.

Das flexible Element ist beispielsweise durch ein Gewebe- oder Folienmaterial gebildet. Denkbar ist, dass das flexible Element mit mindestens einer Materiallage (Gassacklage) der Kammer, die das aufblasbare Volumen der Kammer (insbesondere nach außen) begrenzt, verbunden (z.B. vernäht) ist, wobei diese Verbindung insbesondere gasdicht erfolgt.

Beispielsweise ist in der Materiallage das Gassacks eine Öffnung ausgebildet, wobei das flexible Element im Bereich der Öffnung so mit der Materiallage verbunden (wie erwähnt insbesondere vernäht) ist, dass die Öffnung einen Zugang zu dem Durchgang bildet.

Möglich ist auch, dass das aufblasbare Volumen der Kammer durch zwei, über eine Randnaht miteinander verbundene Materiallagen begrenzt ist, wobei zwischen den Materiallagen eine Öffnung ausgebildet ist und das flexible Element derart mittels der Randnaht und/oder eines Fortsatzes der Randnaht an zumindest einer der Materiallage befestigt ist, dass die Öffnung einen Zugang zu dem Durchgang bildet.

Das Hüllelement kann auch aus dem Durchgang hinausragen und außerhalb des Durchgangs zum Beispiel eine Führung für den Sicherheitsgurt ausbilden. Beispielsweise wird der Sicherheitsgurt durch das Hüllelement außerhalb des Durchgangs entlang einer aufblasbaren Kammer und/oder eines Gaseinleitungsbereichs des Gassacks geführt (siehe Erläuterungen zu dem Einleitungsbereich weiter unten). Darüber hinaus kann das Hüllelement so beschaffen sein, dass sein Querschnitt der Form des Sicherheitsgurtes angepasst ist. Beispielsweise weist das Hüllelement zwei Seiten auf, die sich zumindest näherungsweise parallel zu dem Sicherheitsgurt erstrecken. Denkbar ist auch, dass das Hüllelement näherungsweise die Form eines langgestreckten Ovals aufweist.

Gemäß einer anderen Ausgestaltung der Erfindung ist das Hüllelement mit einer inneren (dem Sicherheitsgurt zugewandten), reibungsmindernden Beschichtung versehen. Beispielsweise umfasst die Beschichtung Silikon oder ist aus Silikon ausgebildet. Denkbar ist auch, dass das Hüllelement aus Silikon oder einem anderen Material, das einen möglichst geringen Reibungskoeffizienten mit dem Material des Sicherheitsgurtes aufweist, gebildet ist.

Die parallel zum Sicherheitsgurt verlaufenden Seiten des Hüllelements können darüber hinaus zumindest abschnittsweise uneben ausgestaltet sein. Denkbar ist ein zumindest näherungsweise wellenförmiger oder sägezahnartiger Verlauf dieser Seiten des Hüllelements, d. h. das Hüllelement kann eine wellenförmige (z.B. sinus- oder trapezförmige) Struktur aufweisen (insbesondere in einem Querschnitt entlang der Erstreckungsrichtung des Sicherheitsgurtes betrachtet). Mit dieser Ausgestaltung des Hüllelements befinden sich vor dem Aufblasen des Gassacks in Richtung des Sicherheitsgurtes im Wesentlichen nur vorspringende Abschnitte des Hüllelements in Kontakt mit dem Sicherheitsgurt, so dass bei einem Abwickeln des Gurtes möglichst geringe Reibungskräfte zwischen dem Hüllelement und dem Sicherheitsgurt wirken. Bei einem Aufblasen des Gassacks wird das Hüllelement gegen den Sicherheitsgurt gedrückt, so dass es flächig an diesem anliegt und eine größere Reibungskraft zwischen dem Hüllelement und dem Sicherheitsgurt auftritt.

Beispielsweise beträgt der Abstand zwischen benachbarten Wellenbergen oder Wellentälern weniger als 15 mm oder weniger als 10 mm, wobei die Wellenlänge und/oder die Amplitude der Wellenstruktur ortsabhängig variieren kann. Vorstellbar ist auch, dass die wellenförmige Struktur eines oberen Abschnitts des Hüllelements verschieden von der wellenförmigen Struktur eines unteren Abschnitts des Hüllelements ist. Beispielsweise verläuft der obere Abschnitt trapezförmig und der untere Abschnitt sinusförmig, so dass der obere Abschnitt biegesteifer als der untere Abschnitt ist. Mit dieser Ausgestaltung könnte zum Beispiel der obere Teil des umhüllten Gassacks mit einer Hebevorrichtung (Lifter) von der Schulter des Fahrzeuginsassen abgehoben werden; insbesondere, um den Komfort bei der Benutzung der Sicherheitsgurtanordnung zu verbessern.

Des Weiteren könnte ein innerer Abschnitt des (insbesondere wie oben erläutert gewellten) Hüllelements (zum Beispiel bis etwa 25% seiner Wandstärke) aus einem reibungsarmen Material hergestellt sein, während der restliche Abschnitt des Hüllelements (zum Beispiel bis etwa 75% seiner Wandstärke) aus einem anderen Material ausgebildet ist; zum Beispiel aus einem Material, das die Biegesteifigkeit und/oder die Zugfestigkeit beeinflusst (insbesondere vergrößert). Eine Nachbehandlung des Hüllelements (zum Beispiel das Aufbringen einer Beschichtung aus einem reibungsarmen Material) könnte damit entfallen.

Möglich ist auch, dass eine dem Fahrzeuginsassen abgewandte Seite des Hüllelements konvex verläuft (insbesondere im Querschnitt senkrecht zum Verlauf des Sicherheitsgurtes betrachtet). Die dem Fahrzeuginsassen zugewandte Seite des Hüllelements kann hingegen zumindest näherungsweise plan ausgebildet sein.

Gemäß einer anderen Ausgestaltung der Erfindung grenzt ein erstes Ende des Durchgangs an eine erste Öffnung des Gassacks und ein zweites Ende des Durchgangs an eine zweite Öffnung des Gassacks an, wobei der Sicherheitsgurt über die erste Öffnung in den Durchgang ein- und aus der zweiten Öffnung aus dem Durchgang austritt. Beispielsweise sind die erste und die zweite Öffnung in derselben Materiallage (Gassacklage) des Gassacks ausgebildet (zum Beispiel in einer dem Fahrzeuginsassen zugewandten Gassacklage). Möglich ist jedoch auch, dass sich die Öffnungen in unterschiedlichen Gassacklagen des Gassacks befinden; beispielsweise ist die erste Öffnung, durch die der Sicherheitsgurt in den Durchgang eintritt, in einer dem Fahrzeuginsassen zugewandten Gassacklage ausgebildet, während sich die zweite Öffnung, durch die der Sicherheitsgurt aus dem Durchgang austritt, in der in dem Fahrzeuginsassen abgewandten Gassacklage befindet.

Die erfindungsgemäße Sicherheitsgurtanordnung kann auch ein Fixierelement umfassen, über das der Gassack an einer Komponente eines Fahrzeugsitzes (insbesondere lösbar) befestigbar ist; zum Beispiel nach Art einer Rastverbindung. Beispielsweise erfolgt über das Fixierelement eine Befestigung an einer Führungseinrichtung des Fahrzeugsitzes, in der der Sicherheitsgurt geführt ist. Die Führungseinrichtung weist insbesondere einen Führungskanal zum Führen des Sicherheitsgurtes auf, wobei der Führungskanal beispielsweise oberhalb einer Schulter des auf dem Fahrzeugsitz befindlichen Fahrzeuginsassen positioniert ist. Möglich ist zudem, dass die erfindungsgemäße Sicherheitsgurtanordnung eine Gaszuleitung umfasst (vgl. den unten erläuterten zweiten Aspekt der Erfindung), die sich beispielsweise ausgehend von einem Gasgenerator zum Aufblasen des Gassacks in Richtung der Führungseinrichtung erstreckt.

Das Fixierelement weist insbesondere eine Durchgangsöffnung, durch die sich der Sicherheitsgurt hindurch erstreckt, und/oder eine Durchgangsöffnung, durch die hindurch ein Gaseinleitungsbereich des Gassacks (siehe Erläuterungen hierzu weiter unten) verläuft, auf.

Möglich ist auch, dass die Sicherheitsgurtanordnung eine äußere Umhüllung aufweist, die den Gassack zumindest teilweise umgibt. Beispielsweise ist die äußere Umhüllung aus einem Gewebe- oder Folienmaterial ausgebildet. Darüber hinaus läuft insbesondere auch der Sicherheitsgurt zumindest teilweise durch die äußere Umhüllung hindurch.

Denkbar ist darüber hinaus, dass die äußere Umhüllung an dem Fixierelement festgelegt ist. Möglich ist auch, dass sich die äußere Umhüllung bei einer Auszugsbewegung des Sicherheitsgurtes nach einer Ankopplung des Gassacks an den Sicherheitsgurt von dem Gassack löst oder aufreißt, so dass der Gassack der Auszugsbewegung des Sicherheitsgurtes folgen kann.

Alternativ oder zusätzlich ist es auch möglich, dass sich bei einer Auszugsbewegung des Sicherheitsgurtes nach der Ankopplung des Gassacks das Fixierelement von der Fahrzeugsitzkomponente löst und somit einem Mitbewegen des Gassacks mit dem Sicherheitsgurt nicht entgegenwirkt.

Gemäß einer weiteren Ausgestaltung der Erfindung umfasst die Sicherheitsgurtanordnung mindestens ein Verbindungselement (zum Beispiel in Form eines Rast- oder Klemmelements), mit dem die äußere Umhüllung und das Hüllelement miteinander verbunden sind. Denkbar ist, dass das Hüllelement und/oder die äußere Umhüllung jeweils mindestens eine Öffnung aufweisen, in die entsprechende Verbindungsabschnitte (zum Beispiel Haken oder sonstige Vorsprünge) des Verbindungselementes eingreifen. Es kann zudem ein Abdeckelement vorgesehen sein, das mit dem Verbindungselement verbunden (zum Beispiel verrastet) ist und das insbesondere dazu dient, Komponenten (zum Beispiel die oben erwähnten Verbindungsabschnitte) des Verbindungselementes abzudecken (z.B. aus ästhetischen Gründen und/oder um ein Verhaken des Verbindungselements mit der Kleidung des Fahrzeuginsassen zu verhindern).

Des Weiteren umfasst das Verbindungselement eine (zum Beispiel schlitzartige) Durchgangsöffnung, durch die hindurch der Sicherheitsgurt verläuft. Das Abdeckelement kann ebenfalls eine Öffnung für den Sicherheitsgurt aufweisen.

In einem anderen Ausführungsbeispiel der Erfindung weist der Gassack einen sich oberhalb eines Thoraxbereiches erstreckenden Kopfbereich auf, wobei der Kopfbereich mindestens eine Einbuchtung besitzt. Die Einbuchtung kann sich als eine nicht befüllbare Öffnung vom Fahrzeuginsassen her gesehen durch den kompletten Gassack oder nur durch einen Teil des Gassacks hindurch erstrecken. Beispielsweise wird die Einbuchtung von Abschnitten des Kopfbereiches und des Thoraxbereichs ringförmig umgeben. In der Einbuchtung kann - insbesondere beabstandet von der dem Fahrzeuginsassen zugewandten Gassacklage - mindestens ein (insbesondere flächiges) Element angeordnet sein, welches die Öffnung zumindest teilweise verschließt und die Öffnung begrenzende Abschnitte einer oder mehrerer Gassacklagen (Wandungsteile) des Gassackes miteinander verbindet und so insbesondere ein Aufspreizen der Einbuchtung beim Eintauchen des Kopfes des Fahrzeuginsassen begrenzt.

Die Einbuchtung verläuft insbesondere länglich, wobei sie sich beispielsweise in vertikaler Richtung erstreckt.

Gemäß einem anderen Ausführungsbeispiel betrifft die Erfindung eine Sicherheitsgurtanordnung für ein Kraftfahrzeug, wie oben beschrieben, mit
- mindestens einem Sicherheitsgurt zum Schutz eines auf einem Fahrzeugsitz befindlichen Fahrzeuginsassen;
- mindestens einem an dem Sicherheitsgurt angeordneten, zum Schutz des Fahrzeuginsassen aufblasbaren Gassack;
- einem Gasgenerator zum Aufblasen des Gassacks;
- einer Gaszuleitung, über die vom Gasgenerator freigesetztes Gas dem Gassack zuleitbar ist, wobei
- der Gassack auf ein Signal einer Pre-Crash oder Crash-Sensorik des Kraftfahrzeugs oder infolge eines Aufblasens an den Sicherheitsgurt ankoppelt, so dass der Gassack einer Auszugsbewegung des Sicherheitsgurtes und damit einer Bewegung des Fahrzeuginsassen folgt, wobei
- die Gaszuleitung mit einem Einleitungsbereich des Gassacks so verbunden ist, dass sich der Einleitungsbereich von einem Ende der Gaszuleitung löst, wenn der Sicherheitsgurt nach einem Ankoppeln des Gassacks an den Sicherheitsgurt um eine vorgebbare Auszugslänge ausgezogen wird.

Der Einleitungsbereich des Gassacks ist insbesondere mit mindestens einer aufblasbaren Kammer des Gassacks verbunden, so dass nach einem Auslösen des Gasgenerators Gas vom Gasgenerator über den Einleitungsbereich in die aufblasbare Kammer einströmt. Beispielsweise ist der Einleitungsbereich zumindest abschnittsweise länglich, insbesondere schlauchförmig ausgeformt.

Möglich ist zudem, dass das Ende der Gaszuleitung durch ein starres (insbesondere zylinderförmiges) Endstück ausgebildet ist, mit dem der Einleitungsbereich des Gassacks verbunden ist. Das Endstück ragt beispielsweise zumindest mit einem Abschnitt in einen Endabschnitt des Einleitungsbereichs des Gassacks hinein. Denkbar ist auch, dass das gasgeneratorseitige Ende des Einleitungsbereichs des Gassacks lösbar, zum Beispiel über eine lösbare Klemmverbindung, mit dem Ende der Gaszuleitung (insbesondere mit dem erwähnten Endstück) verbunden ist. Die Klemmverbindung löst sich bei einem Ausziehen des Sicherheitsgurtes über die vorgebbare Auszugslänge hinaus.

Insbesondere ist der Einleitungsbereich des Gassacks so ausgebildet, dass bei einem Auszug des Sicherheitsgurtes nach dem Ankoppeln des Gassacks an den Sicherheitsgurt in Folge einer Kollision des Fahrzeugs eine Einleitung von Gas über den Einleitungsbereich bis zum Erreichen der vorgebbaren Auszugslänge möglich ist.

Beispielsweise weist der Einleitungsbereich einen Abschnitt auf, der eine Zusatzlänge bereitstellt, die bei einem Auszug des Sicherheitsgurtes bis zum Erreichen der vorgebbaren Auszugslänge ein Entfernen einer aufblasbaren Kammer von der Gaszuleitung ermöglicht, ohne dass es zu einer Unterbrechung der Gaseinleitung in die Kammer kommt.

Denkbar ist, dass der die Zusatzlänge bereitstellende Abschnitt durch einen gerafften Teilabschnitt des Einleitungsbereichs ausgebildet ist. Beispielsweise ist der geraffte Teilabschnitt auf der Gaszuleitung, zum Beispiel auf dem oben erwähnten Endstück der Gaszuleitung, bevorratet. Möglich ist, dass der geraffte Teilabschnitt des Einleitungsbereichs mit Hilfe eines Befestigungselementes (zum Beispiel in Form eines Fixierbandes) lösbar mit der Gaszuleitung verbunden ist. Das Befestigungselement weist beispielsweise eine Sollbruchstelle (zum Beispiel eine Sollreißstelle) auf, die insbesondere bei einem Auszug des Sicherheitsgurtes aufbricht (insbesondere aufreißt), um eine Straffung des gerafften Teilabschnitts zu ermöglichen.

Möglich ist auch, dass der die Zusatzlänge bereitstellende Abschnitt des Einleitungsbereichs nicht geradlinig verläuft, sondern vor einem Auszug des Sicherheitsgurtes zum Beispiel mindestens einen schlaufenartigen Teilabschnitt aufweist oder mäanderförmig verläuft, wobei sich der Abschnitt mit Ausziehen des Sicherheitsgurtes strafft. Denkbar ist auch, dass die Gaszuleitung (insbesondere das oben erwähnte Endstück der Gaszuleitung) mit einem Abschnitt in den Einleitungsbereich des Gassacks hineinragt, dessen Länge geringer ist als die bei einem Auszug des Sicherheitsgurtes nach dem Ankoppeln des Gassacks an den Sicherheitsgurt zur Aufrechterhaltung der Gaseinleitung in die Kammer erforderliche Zusatzlänge. Beispielsweise ist die Länge des in den Einleitungsbereich hineinragenden Abschnitts der Gaszuleitung kleiner als die Länge der Strecke, die der Gassack bei einer Auszugsbewegung des Sicherheitsgurtes bis zu der vorgebbaren Auszugslänge zurücklegt.

Die erforderliche Zusatzlänge kann deutlich geringer sein als bei vorbekannten Lösungen, da lediglich eine Auszugslänge bis zu der vorgebbaren Auszugslänge bzw. eine Vorverlagerung des Fahrzeuginsassen bis zu einer entsprechenden vorgebbaren Insassenposition abgedeckt werden muss. Die vorgebbare Insassenposition bzw. die vorgebbare Auszugslänge, bei der sich der Einleitungsbereich des Gassacks von der Gaszuleitung löst, wird insbesondere abhängig von der Gasliefercharakteristik des Gasgenerators bestimmt. Beispielsweise soll zum Zeitpunkt des Lösens des Einleitungsbereichs des Gassacks von der Zuleitung kein oder zumindest im Wesentlichen kein Gas mehr von dem Gasgenerator bereitgestellt werden.

Gemäß einer anderen Weiterbildung der Erfindung ist ein Ventil (z.B. in Form eines Rückschlag- bzw. Einwegventils) vorhanden, das einem Ausströmen von Gas aus dem Gassack nach einem Ablösen des Einleitungsbereichs des Gassacks von der Gaszuleitung (insbesondere in Folge eines Überschreitens der vorgegebenen Auszugslänge) entgegenwirkt. Insbesondere wird das Ventil bei einem Ablösen des Einleitungsbereichs des Gassacks von der Gaszuleitung aktiviert. Beispielsweise ist das Ventil im Bereich der Verbindung der Gaszuleitung (insbesondere des erwähnten Endstücks) und dem Einleitungsbereich des Gassacks angeordnet. Denkbar ist auch, dass das Ventil im Inneren des Einleitungsbereichs des Gassacks angeordnet ist oder durch den Einleitungsbereich ausgebildet wird.

Denkbar ist auch, dass die Ausdehnung des Bereichs, in dem die Zusatzlänge bereitgestellt wird, einen vorgebbaren Abstand von einer aufblasbaren Kammer des Gassacks nicht übersteigt. Beispielsweise wird die Zusatzlänge in einem Bereich zwischen der aufblasbaren Kammer und einer an dem Fahrzeugsitz angeordneten Führungseinrichtung zur Führung des Sicherheitsgurtes bereitgestellt. Hierdurch können zum Beispiel aufwendige Mechanismen zur Umlenkung oder Freigabe der Gaszuleitung entfallen. Denkbar ist zudem, dass mit der Gaszuleitung über den Einleitungsbereich des Gassacks größere Strömungsquerschnitt realisiert werden können.

Die weiter oben erläuterten Ausgestaltungen der Sicherheitsgurtanordnung des ersten Erfindungsaspekts können analog natürlich auch zur Weiterbildung der Sicherheitsgurtanordnung des zweiten Erfindungsaspekts verwendet werden. Zudem wird darauf hingewiesen, dass die Ankopplung des Gassacks an den Sicherheitsgurt analog zum ersten Erfindungsaspekt zwar unter Einwirkung des Innendrucks in dem Gassack erfolgen kann. Denkbar sind jedoch auch andere Kopplungsmechanismen. Beispielsweise offenbart die deutsche Patentanmeldung 10 2017 216 180.9 vom 13.09.2017 Kopplungsmechanismen, die zur Weiterbildung der Sicherheitsgurtanordnung des zweiten Erfindungsaspekts verwendbar sind. Auf die Patentanmeldung 10 2017 216 180.9 wird hiermit insofern ausdrücklich Bezug genommen.

Gemäß einem anderen Ausführungsbeispiel betrifft die Erfindung eine Sicherheitsgurtanordnung für ein Kraftfahrzeug, wie oben beschrieben, mit
- mindestens einem Sicherheitsgurt zum Schutz eines auf einem Fahrzeugsitz befindlichen Fahrzeuginsassen;
- mindestens einem an dem Sicherheitsgurt angeordneten, zum Schutz des Fahrzeuginsassen aufblasbaren Gassack;
- einer äußeren Umhüllung, die den Gassack zumindest teilweise umgibt, wobei
- der Gassack auf ein Signal einer Pre-Crash oder Crash-Sensorik des Kraftfahrzeugs oder infolge eines Aufblasens an den Sicherheitsgurt ankoppelt, so dass der Gassack einer Auszugsbewegung des Sicherheitsgurtes und damit einer Bewegung des Fahrzeuginsassen folgt; und
- mindestens einen an der äußeren Umhüllung angeordneten Sensor zum Erfassen von Vitaldaten des Fahrzeuginsassen und/oder mindestens einer Umgebungsgröße und/oder eines Signalgebers.

Der Sensor dient beispielsweise zum Ermitteln einer Herzrate, einer Atemaktivität, einer Temperatur und/oder einer Bewegung des Fahrzeuginsassen. Denkbar ist auch, dass der Sensor zum Ermitteln einer Umgebungsgröße, zum Beispiel eine Temperatur oder einer Stoffkonzentration (zum Beispiel in der Atemluft des Fahrzeuginsassen) ausgebildet ist. Beispielsweise handelt es sich bei dem Sensor um einen Beschleunigungssensor, Mikrofon oder einen Radarsensor, wobei die Erfindung natürlich nicht auf einen bestimmten Sensortyp beschränkt ist.

Beispielsweise ist der mindestens eine Sensor an einem dem Fahrzeuginsassen zugewandten Abschnitt der äußeren Umhüllung angeordnet, wobei der Sensor an der Außen- oder an der Innenseite dieses Abschnitts angeordnet sein kann. Ein derart positionierter Sensor dient insbesondere zu der erwähnten Bestimmung einer Herzrate, einer Atemaktivität, einer Temperatur und/oder einer Bewegung des Fahrzeuginsassen. Möglich ist jedoch auch, dass der Sensor an einem dem Fahrzeuginsassen abgewandten Abschnitt der äußeren Umhüllung angebracht ist, wobei der Sensor wiederum an einer Außen -oder einer Innenseite dieses Abschnitts befestigt sein kann. Ein derartig positionierter Sensor, der insbesondere in Form eines Mikrofons ausgebildet ist, kann zum Beispiel zur Analyse der Atemluft des Fahrzeuginsassen oder zur Bestimmung von Umgebungsgrößen (etwa der Umgebungstemperatur) dienen. Natürlich können mehrere Sensoren vorhanden sein, die an unterschiedlichen Abschnitten der äußeren Umhüllung angebracht sind.

Es wird darauf hingewiesen, dass unter einem "Sensor" nicht zwingend nur ein sensierendes Element verstanden werden soll, sondern z.B. auch eine Einheit (ein Modul), die neben dem sensierenden Element (etwa ein Halbleiterbauelement) weitere (insbesondere elektronische) Komponenten umfasst. Beispielsweise weist der Sensor ein sensierendes Bauelement auf, das auf einer Leiterplatte angeordnet ist. Denkbar ist auch, dass mehrere sensierende Elemente vorhanden sind, die zum Beispiel auf einer gemeinsamen Leiterplatte angeordnet sind. Analoges gilt für den Signalgeber.

Bei dem Signalgeber handelt es sich z.B. um einen Aktuator, mit dem (insbesondere haptische) Signale an den Fahrzeuginsassen übermittelbar sind, oder um einen akustischen Wandler (z.B. um einen Lautsprecher, etwa einer Freisprechanlage).

Der Sensor und/oder der Signalgeber wird insbesondere mit Hilfe mindestens einer elektrischen Leitung kontaktiert, wobei die elektrische Leitung insbesondere eine Datenleitung und/oder eine Stromleitung darstellt. Beispielsweise verläuft die elektrische Leitung zumindest abschnittsweise an einer Außenseite der äußeren Umhüllung, wobei sie dort befestigt (beispielsweise eingewebt) sein kann. Denkbar ist jedoch auch, dass sich die elektrische Leitung zumindest abschnittsweise an einer Innenseite der äußeren Umhüllung erstreckt.

Denkbar ist auch, dass die Sicherheitsgurtanordnung einen Energiespeicher zum Speichern von elektrischer Energie aufweist, der zur elektrischen Versorgung des mindestens einen Sensors und/oder des Signalgebers dient. Darüber hinaus kann die Sicherheitsgurtanordnung auch ein Funkmodul umfassen, mit dem sich zum Beispiel Sensordaten drahtlos an einen Empfänger übertragen lassen.

Gemäß einer anderen Ausgestaltung der Erfindung weist die elektrische Leitung eine Zusatzlänge auf, die bei einem Auszug des Sicherheitsgurtes das Mitbewegen des Gassacks mit dem Sicherheitsgurt ermöglicht, ohne dass es zu einer Unterbrechung der elektrischen Verbindung zwischen dem Sensor und/oder dem Signalgeber und der Fahrzeugelektronik kommt. Beispielsweise ist die Zusatzlänge durch einen gefalteten oder gewickelten Abschnitt der elektrischen Leitung ausgebildet.

Die Erfindung betrifft auch ein Kraftfahrzeug mit einer erfindungsgemäßen Sicherheitsgurtanordnung.

Die Erfindung wird im Folgenden anhand von Ausführungsbeispielen unter Bezugnahme auf die Figuren näher erläutert. Es zeigen:
- Figuren 1 bis 3: unterschiedliche Zustände einer erfindungsgemäßen Sicherheitsgurtanordnung;
- Figur 4: eine Darstellung des Gassacks aus den Figuren 1 bis 3;
- Figur 5: einen Schnitt durch den Gassack aus Figur 4;
- Figur 6: eine erfindungsgemäße Sicherheitsgurtanordnung, wobei der Gassack in flach ausgebreitetem Zustand dargestellt ist;
- Figur 7: eine partielle Schnittdarstellung einer erfindungsgemäßen Sicherheitsgurtanordnung;
- Figur 8: einen Schnitt durch den Einleitungsbereich eines Gassacks einer erfindungsgemäßen Sicherheitsgurtanordnung;
- Figur 9: den Einleitungsbereich des Gassacks aus Figur 8 nach Lösen von der Gaszuleitung;
- Figur 10: ein Ende des Einleitungsbereichs des Gassacks aus den Figuren 8 und 9 in flach ausgebreitetem Zustand;
- Figuren 11A bis 11E: Darstellungen des Gassacks einer erfindungsgemäßen Sicherheitsgurtanordnung;
- Figur 11F: eine Abwandlung der Figuren 11A bis 11E;
- Figur 12: ein beispielhaftes Hüllelement in Draufsicht;
- Figur 13: einen Schnitt durch das Hüllelement aus Figur 12;
- Figur 14: einen vergrößerten Ausschnitt des Hüllelements aus Figur 12;
- Figur 15: eine Abwandlung der Figur 6;
- Figur 16: eine Abwandlung der Figur 15;
- Figur 17: eine Variante einer Anbindung der Sicherheitsgurtanordnung;
- Figur 18: eine Seitenansicht der Anbindung aus Figur 17; und
- Figur 19: ein Ausführungsbeispiel einer Sensoranordnung gemäß einem weiteren Aspekt der Erfindung.

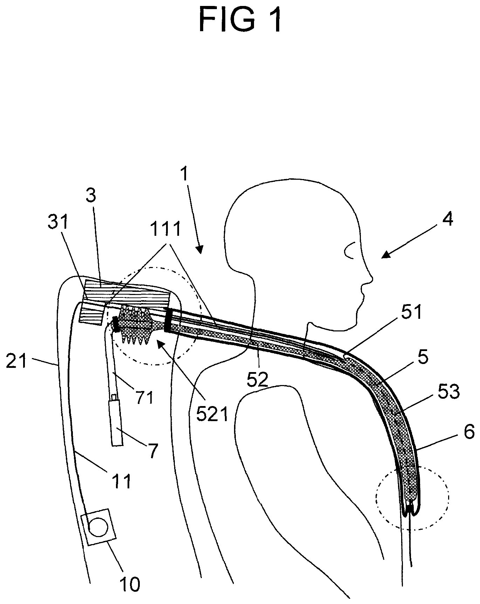

Figur 1 zeigt eine Sicherheitsgurtanordnung 1 gemäß einem Ausführungsbeispiel der Erfindung, wobei die Sicherheitsgurtanordnung 1 einen Sicherheitsgurt 11, der auf eine Aufwickelvorrichtung 10 in an sich üblicher Weise aufwickelbar ist, umfasst. Der Sicherheitsgurt 11 ist in einer an einer Rückenlehne 21 eines Fahrzeugsitzes angeordneten Führungseinrichtung 3 geführt; und zwar so, dass sich ein Schulterabschnitt 111 des Sicherheitsgurtes 11 durch einen Führungskanal 31 der Führungseinrichtung 3 hindurch in Richtung auf einen auf dem Fahrzeugsitz befindlichen Fahrzeuginsassen 4 erstreckt. Der Führungskanal 31 befindet sich insbesondere oberhalb einer Schulter des Fahrzeuginsassen 4, so dass der Schulterabschnitt 111 über die Schulter des Fahrzeuginsassen 4 geführt wird.

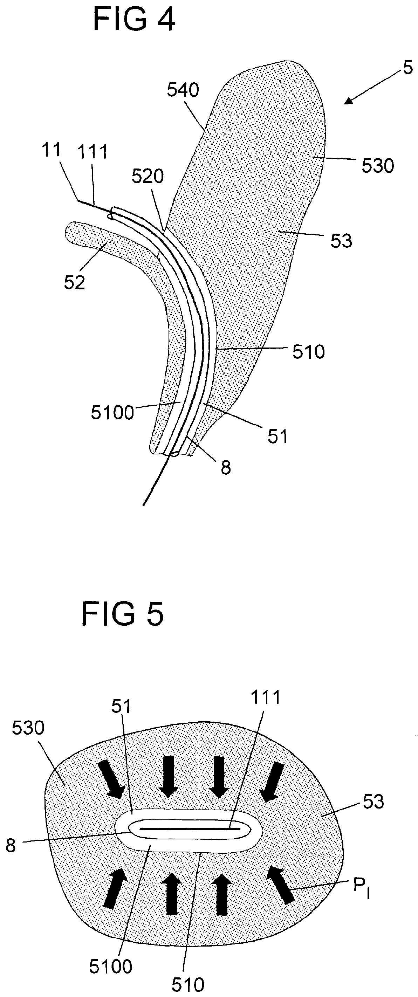

An dem Schulterabschnitt 111 des Sicherheitsgurts 11 ist ein in einer aus einem flexiblen Material, beispielsweise aus einem Gewebe, bestehenden äußeren Umhüllung 6 untergebrachter aufblasbarer Gassack 5 angeordnet. Der Gassack 5 weist einen Durchgang 51, in dem sich ein Hüllelement 8 (vgl. zum Beispiel die Detailansicht die Figuren 4 und 5) befindet, auf. Der Schulterabschnitt 111 verläuft durch den Durchgang 51 hindurch und zumindest teilweise innerhalb des Hüllelements 8. Fig. 1 zeigt die Sicherheitsgurtanordnung 1 nach Anlegen des Sicherheitsgurtes 11, aber vor einem Aktvieren des Gassacks 5.

Zur Befüllung des Gassacks 5 mit Gas dient ein in der Rückenlehne 21 befindlicher Gasgenerator 7, wobei von dem Gasgenerator 7 freigesetztes Gas über eine Gaszuleitung 71 und einen schlauchförmigen Einleitungsbereich 52 des Gassacks 5 in mindestens eine aufblasbare Kammer 53 des Gassacks 5 einströmen kann.

Der Durchgang 51 des Gassacks 5 und das im Durchgang 51 befindliche Hüllelement 8 sind so beschaffen, dass der Sicherheitsgurt 11 vor einem Aufblasen des Gassacks 5, d.h. vor einem Aktivieren des Gasgenerators 7, relativ zu dem Gassack 5 beweglich ist. Während eines Aufblasens des Gassacks 5 oder nach einem Aufblasen des Gassacks 5 jedoch wird zumindest ein Teilabschnitt einer ein inneres Volumen des Durchgangs 51 gegenüber der aufblasbaren Kammer 53 des Gassacks 5 abgrenzenden Wandung des Durchgangs 51 unter Einwirkung des im Gassack 5 herrschenden Innendrucks über das Hüllelement 8 gegen den Sicherheitsgurt 11 gedrückt, so dass eine Kopplung der Kammer 53 und damit des Gassacks 5 an den Sicherheitsgurt 11 erfolgt. Diese Kopplung hat zur Folge, dass der Gassack 5 einer Auszugsbewegung des Sicherheitsgurtes 11 in Folge einer kollisionsbedingten Vorwärtsbewegung des Fahrzeuginsassen 4 folgt.

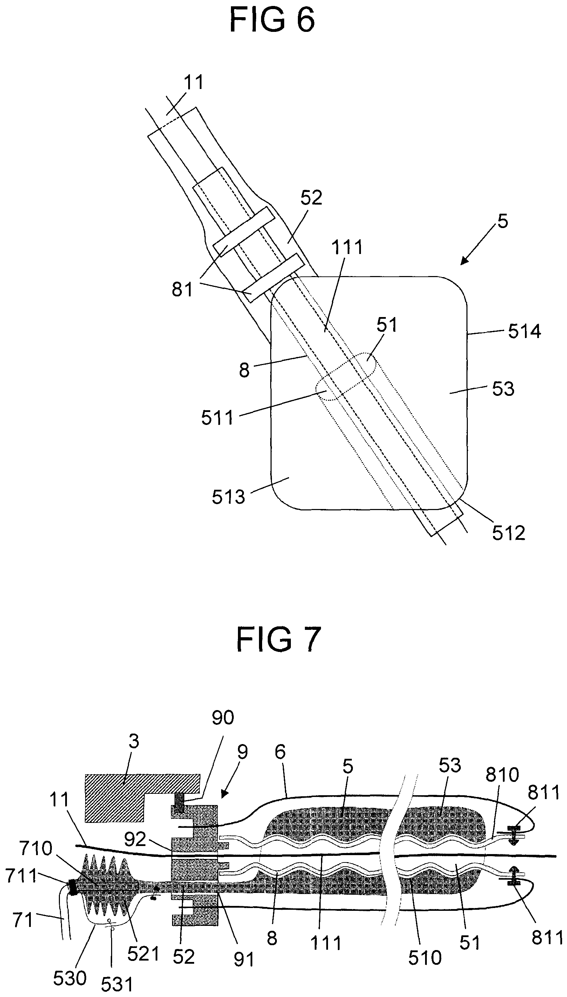

Um die Befüllung der Kammer 53 mit Gas auch bei einer derartigen Vorverlagerung des Gassacks 5 aufrechterhalten zu können, umfasst der Einleitungsbereich 52 des Gassacks 5 einen gerafften Abschnitt 521, der eine Zusatzlänge des Einleitungsbereichs 52 bereitstellt, die ein Einleiten von Gas in die Kammer 53 auch bei einem Entfernen der Kammer 53 von der Zuleitung 71 bis zu einem vorgebbaren Abstand ermöglicht. Weitere Details z.B. des Einleitungsbereichs 52 und der Zuleitung 71 sind in Figur 7 gezeigt.

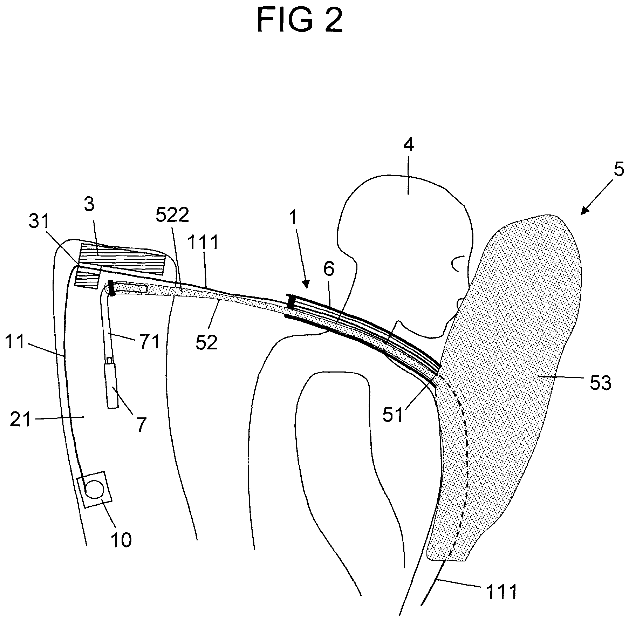

Der Zustand der Sicherheitsgurtanordnung 1 und insbesondere des Gassacks 5 nach oder während einer Kollision des Fahrzeugs, d. h. nach einem zumindest teilweisen Aufblasen des Gassacks 5, ist in Figur 2 dargestellt. Es erfolgte die oben beschriebene Ankopplung des Gassacks 5 an den Sicherheitsgurt 11, so dass einer Relativbewegung zwischen dem Sicherheitsgurt 11 und dem Gassack 5 entgegengewirkt wird und der Gassack 5 daher einer durch die Kollision des Fahrzeugs hervorgerufenen Vorverlagerung des Fahrzeuginsassen 4 und einer damit einhergehenden Auszugsbewegung des Sicherheitsgurtes 11 und der damit einhergehenden Verlängerung des Schulterabschnitts 111 des Sicherheitsgurtes 11 folgt. Der (zunächst an der Zuleitung 71 fixierte) geraffte Abschnitt 521 hat sich gelöst und die Zusatzlänge des Einleitungsbereichs 52 freigegeben. Dadurch wird trotz der Vorverlagerung des Fahrzeuginsassen 4 die Gaseinleitung in die Kammer 53 des Gassacks 5 nicht unterbrochen.

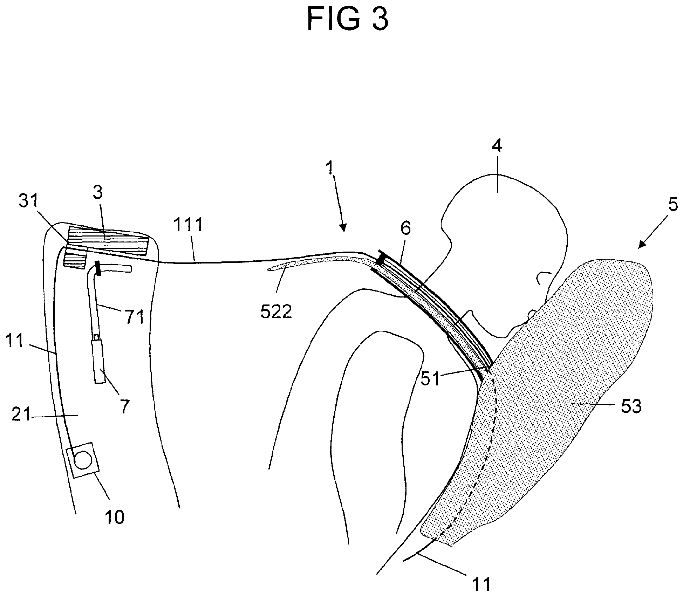

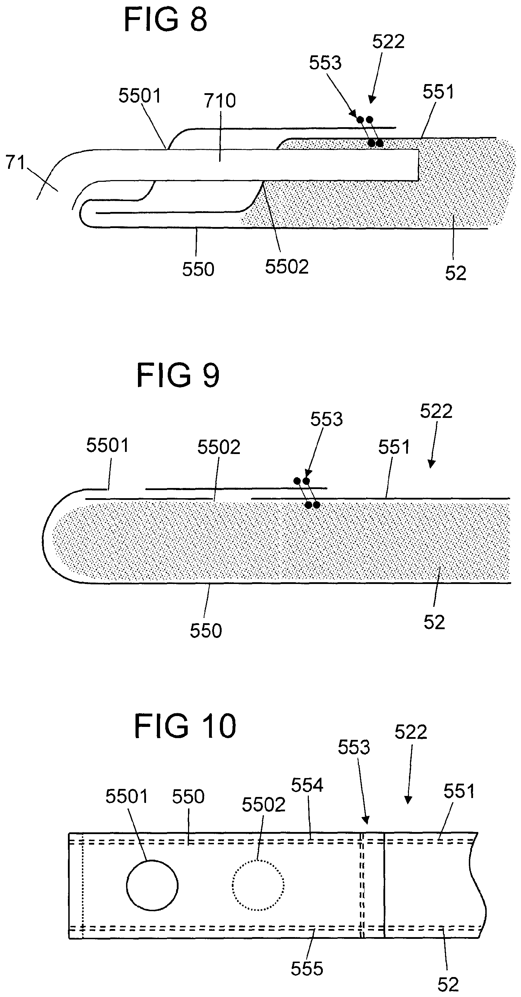

Bei einem Überschreiten einer vorgegebenen Auszugslänge des Sicherheitsgurtes 11 jedoch löst sich der mit der Zuleitung 71 zunächst verbundene Endabschnitt 522 des Einleitungsbereichs 52 des Gassacks 5 von der Zuleitung 71, so dass bei einer weiteren Vorverlagerung des Fahrzeuginsassen 4 keine Gaseinleitung in die Kammer 53 mehr erfolgt (vgl. Figur 3). Der Endabschnitt 522 kann mit einem Ventil versehen sein, das ein Ausströmen von Gas aus dem Gassack 5 nach dem Ablösen des Einleitungsbereichs 52 von der Zuleitung 71 verhindert (vgl. z.B. die Figuren 8 bis 10). Die Auszugslänge des Sicherheitsgurtes 11, bei der das Ablösen des Einleitungsbereichs 52 von der Zuleitung 71 erfolgt, hängt insbesondere von der durch den gerafften Abschnitt 521 des Einleitungsbereichs 52 bereitgestellten Zusatzlänge ab.

Figur 4 zeigt den Gassack 5 der Figur 2 in vergrößerter Darstellung. Danach verläuft das Hüllelement 8 schlauchförmig innerhalb des Durchgangs 51 des Gassacks 5 und erstreckt sich über den Durchgang 51 hinaus. Denkbar ist, dass das Hüllelement 8 außerhalb des Durchgangs 51 zur Führung des Sicherheitsgurtes 11 dient. Der Durchgang 51 (dessen Wandung) kann wie oben bereits erwähnt durch ein flexibles Element 510 ausgebildet sein, das ein inneres, nicht mit Gas befüllbares Volumen 5100 des Durchgangs 51 von einem aufblasbaren Volumen 530 der Kammer 53 trennt. Das flexible Element 510 ist beispielsweise im Bereich einer Öffnung 520 des Gassacks 5, die einen Zugang zu dem Durchgang 51 ausbildet, mit mindestens einer Materiallage 540, die das aufblasbare Volumen 530 der Kammer 53 begrenzt, verbunden; insbesondere vernäht. Beispielsweise ist die Öffnung 520 in einem Verbindungsbereich benachbarter, das aufblasbare Volumen 530 der Kammer 53 begrenzender Materiallagen angeordnet. Die beiden erwähnten Ausgestaltungen der Öffnung 520 sind auch für eine Öffnung des Gassacks 5 möglich, welche einen Ausgang aus dem Durchgang 51, aus dem der Sicherheitsgurt 11 austritt, ausbildet.

Möglich ist darüber hinaus, dass eine Innenseite des Hüllelements 8 zumindest abschnittsweise und/oder zumindest innerhalb des Durchgangs 51 mit einer reibungsmindernden Beschichtung versehen ist, um vor einem Aufblasen des Gassacks 5 eine möglichst ungehinderte Bewegung des Schulterabschnitts 111 des Sicherheitsgurtes 11 relativ zu dem Gassack 5 zu ermöglichen. Nach Aufblasen des Gassacks 5 erfolgt jedoch die oben beschriebene Ankopplung des Gassacks 5 an den Sicherheitsgurt 11, wobei in Figur 4 das die Ankopplung bewirkende Anpressen der Kammer 53 an den Sicherheitsgurt 11 infolge des Innendrucks in der Kammer 53 aus Darstellungsgründen nicht gezeigt ist; insbesondere, um das Hüllelement 8 darzustellen zu können.

Der Mechanismus, der zu der Ankopplung der Kammer 53 an den Sicherheitsgurt 11 führt, ist in Figur 5, die einen Schnitt durch den Gassack 5 einschließlich des Durchgangs 51 der Figur 4 zeigt, angedeutet, wobei in Figur 5 wie in Fig. 4 die Abstände zwischen dem flexiblen Element 510, dem Hüllelement 8 und dem Sicherheitsgurt 11 vergrößert dargestellt sind. Danach wirkt auf das flexible Element 510 des Durchgangs 51 und damit auf das Hüllelement 8 ein Innendruck P_{I} in der Kammer 43, so dass das flexible Element 510 und das Hüllelement 8 gegen den in dem Durchgang 51 verlaufenden Schulterabschnitt 111 des Sicherheitsgurtes 11 gepresst werden und dadurch eine Ankopplung der Kammer 53 an den Schulterabschnitt 111 erfolgt.

Figur 6 zeigt schematisch den Gassack 5 einer erfindungsgemäßen Sicherheitsgurtanordnung 1 (zum Beispiel der Sicherheitsgurtanordnung der Figuren 1-5) in flach ausgebreitetem Zustand. Das Hüllelement 8 erstreckt sich analog zur Figur 4 zusammen mit dem darin verlaufenden Schulterabschnitt 111 des Sicherheitsgurtes 11 aus dem Durchgang 51 heraus und verläuft in Richtung der Rückenlehne 21 entlang des Einleitungsbereichs 52 des Gassacks 5. Denkbar ist, dass dieser Abschnitt des Hüllelements 8 an dem Einleitungsbereich 52 befestigt ist; zum Beispiel über Laschen 81.

Das Hüllelement 8 und der Sicherheitsgurt 11 erstrecken sich durch eine erste Öffnung 511, die in einer Gassacklage 513 des Gassacks 5 ausgebildet ist, in den Durchgang 51 hinein. Insbesondere ist der Durchgang 51 im Bereich der ersten Öffnung 511 mit der Gassacklage 513 verbunden. Das andere Ende des Durchgangs 51 grenzt an eine zweite Öffnung 512 an, die zwischen zwei Gassacklagen 513, 514 des Gassacks 5 ausgebildet ist; z.B. durch eine Unterbrechung einer Umfangsnaht, über die die beiden Gassacklagen 513, 514 miteinander verbunden sind. Zumindest der Sicherheitsgurt 11 verlässt den Durchgang 51 über die Öffnung 512.

In Figur 7 sind weitere Komponenten der Sicherheitsgurtanordnung 1 der Figuren 1 bis 5 gezeigt. Der Gassack 5 ist dort vor dem Aufblasen, jedoch in einem flach ausgebreiteten Zustand dargestellt.

Beispielsweise umfasst die Zuleitung 71 ein starres Endstück 710, das in den gerafften Abschnitt 521 des Einleitungsbereichs 52 des Gassacks 5 hineinragt. Der Einleitungsbereich 52 ist über ein Befestigungselement 711 (zum Beispiel in Form eines Klemmrings) mit dem Endstück 710 lösbar verbunden. Der geraffte Abschnitt 521 wiederum ist mit einem Fixierband 530 auf dem Endstück 710 zunächst fixiert. Das Fixierband 530 weist eine Reißnaht 531 auf, die nach einer Ankopplung des Gassacks 5 an den Sicherheitsgurt 11 und einer darauf folgenden Auszugsbewegung des Sicherheitsgurtes 11 reißt und den gerafften Abschnitt 521 freigibt.

Darüber hinaus umfasst die Sicherheitsgurtanordnung 1 ein Fixierelement 9, an dem die äußere Umhüllung 6 festgelegt ist, und das lösbar über eine Verbindung 90 (zum Beispiel in Form einer Rastverbindung) mit der Führungseinrichtung 3 des Fahrzeugsitzes verbunden ist. Durch die Fixierung der äußeren Umhüllung 6 an der Führungseinrichtung 3 erfolgt auch eine Fixierung des Gassacks 5 an der Führungseinrichtung 3. Ein Lösen des Fixierelementes 9 (und damit des Gassacks 5) von der Führungseinrichtung 3 durch eine mit einer Vorverlagerung des Fahrzeuginsassen bei einer Kollision des Fahrzeugs einhergehenden Auszugsbewegung des Sicherheitsgurtes 11 ermöglicht so das Mitbewegen des Gassacks 5 mit dem Gurtauszug.

Das Fixierelement 9 umfasst eine erste Durchgangsöffnung 91, durch die sich der Einleitungsbereich 52 des Gassacks 5 hindurch erstreckt, sowie eine zweite Durchgangsöffnung 92, in der der Sicherheitsgurt 11 verläuft. Mit einem Ende ist das Hüllelement 8 die Durchgangsöffnung 92 umgebend am Fixierelement 9 befestigt, z.B. eingehakt. An seinem dem Fixierelement 9 abgewandten Ende ist das Hüllelement 8 über den aus dem Durchgang 51 hinausragenden Abschnitt 810 mit der äußere Umhüllung 6 verbunden; zum Beispiel über mindestens ein Verbindungselement in Form eines Klemm- bzw. Rastelement 811. In einem zwischen dem Fixierelement 9 und dem Klemm- bzw. Rastelement 811 verlaufenden Abschnitt ist die äußere Umhüllung 6 mit einem geschwächten Bereich (z.B. in Form einer Reißnaht oder Perforation) versehen. Lage und Größe des geschwächten Bereiches der äußeren Umhüllung 6 sind vor allem von der Dimensionierung des Gassacks 5 und dessen gewünschter Entfaltung abhängig. Infolge der bei der Befüllung des Gassacks 5 auftretenden Kräfte wird der geschwächte Bereich aufgerissen und eine Öffnung in der Umhüllung 6 für den Austritt des Gassacks 5 geschaffen.

Der Figur 7 ist des Weiteren zu entnehmen, dass das Hüllelement 8 und auch das den Durchgang 51 ausbildende flexible Element 510 nicht plan verlaufen, sondern eine wellenförmige Struktur besitzen. Hierdurch besteht vor dem Aufblasen des Gassacks 5 eine verringerte Kontaktfläche zwischen dem Hüllelement 8 und dem Sicherheitsgurt 11 und somit eine möglichst geringe Reibung zwischen dem Hüllelement 8 und dem Sicherheitsgurt 11. Bei Aktivierung des Gassacks 5, d.h. in einem Zustand der Sicherheitsgurtanordnung 1, in dem eine Ankopplung des Gassacks 5 an den Sicherheitsgurt 11 erwünscht ist, werden das flexible Element 510 und das Hüllelement 8 gegen den Sicherheitsgurt 11 gedrückt und dadurch geglättet. Die Kontaktfläche zwischen dem Hüllelement 8 wird entsprechend vergrößert, so dass erhöhte Reibungskräfte zwischen dem Sicherheitsgurt 11 und dem Hüllelement 8 wirken.

Die Figuren 8 und 9 zeigen eine mögliche Ausgestaltung des Endabschnitts 522 des Einleitungsbereichs 52 des Gassacks 5. Demnach ist der Endabschnitt 522 durch zwei Materiallagen 550, 551, die auch einstückig miteinander verbunden sein können, begrenzt. Die erste Materiallage 550 umgibt einen Abschnitt der zweiten Materiallage 551, wobei ein zurückgeschlagenes Ende der ersten Materiallage 550 über eine Naht 553 mit der zweiten Materiallage 551 verbunden ist. Über weitere, seitliche Nähte 554, 555 (Figur 10) zwischen den Materiallagen 550, 551 wird der (insbesondere weitestgehend gasdichte) Einleitungsbereich 52 des Gassacks 5 ausgebildet.

Die erste und die zweite Materiallage 550, 551 weisen jeweils eine Durchgangsöffnung 5501, 5502 auf, durch die sich die Zuleitung 71, insbesondere das oben dargestellte starre Ende 710, hindurch bis ins Innere des Einleitungsbereichs 52 erstreckt. Nach Aktivieren des Gasgenerators und Aufblasens des Gassacks 5 und Überschreiten der vorgegebenen Auszugslänge des Sicherheitsgurtes 11 löst sich wie oben beschrieben der Einleitungsbereich 52 des Gassacks 5 von der Zuleitung 71 ab.

Dieser Zustand ist in Figur 9 gezeigt. Der Innendruck in dem Einleitungsbereich 52 drückt die zweiten Materiallage 551 gegen einen Abschnitt der ersten Materiallage 550, wodurch die Durchgangsöffnungen 5501, 5502 verschlossen werden. Mit den Durchgangsöffnungen 5501, 5502 und deren Anordnung in der ersten und zweiten Materiallage 550, 551 ist somit ein Rückschlagventil realisiert, das einem Ausströmen von Gas aus dem Einleitungsbereich 52 damit aus dem Gassack 5 entgegenwirkt. Figur 10 zeigt eine Ansicht von oben auf den Endabschnitt 522 des Einleitungsbereichs 52 aus Figur 9.

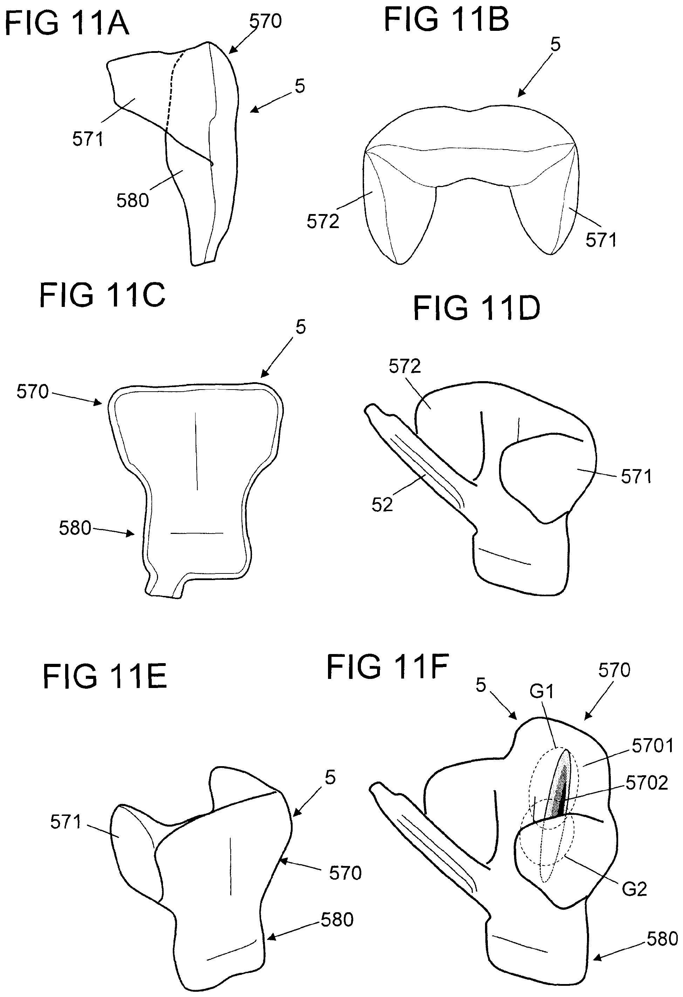

Die Figuren 11A bis 11E zeigen unterschiedliche Ansichten eines Gassacks 5 gemäß einem Ausführungsbeispiel der erfindungsgemäßen Sicherheitsgurtanordnung. Demnach kann der Gassack 5 einen Kopfbereich 570 aufweisen, der sich oberhalb eines Thoraxbereichs 580 erstreckt. Der Kopfbereich 570 umfasst zwei seitliche Kopfkammern 571, 572, die jeweils über eine Trennwand von dem übrigen Kopfbereich 570 abgetrennt sein können. Denkbar ist jedoch auch, dass keine derartigen Trennwände vorhanden sind. Bei einer Abtrennung der Kopfkammern 571, 572 mittels Trennwänden können dort Überströmöffnungen vorgesehen sein, wobei durch die Dimensionierung der Überströmöffnungen eine Verzögerung der Befüllung der Kopfkammern 571, 572 im Vergleich zur Befüllung eines frontalen Abschnitts des Kopfbereichs 570 eingestellt werden kann.

Gemäß Figur 11F weist der Kopfbereich 570 einen sich in Fahrzeughöhenrichtung über die seitlichen Kopfkammern 571, 572 nach oben hinaus erstreckenden Abschnitt 5701 auf. Weiterhin ist der Kopfbereich 570 mit einer Einbuchtung 5702 versehen, welche dem Auftreffbereich des Kopfes des Fahrzeuginsassen bei dessen Vorverlagerung zugeordnet ist und die auftretenden Belastungen beim Auftreffen des Kopfes vermindern soll. Entsprechend befindet sich die Einbuchtung 5702 zwischen den seitlichen Kopfkammern 571, 572, wobei sie sich in den nach oben erweiterten Abschnitt 5701 und/oder auch in den Thoraxbereich 580 hinein erstrecken kann. Die Einbuchtung 5702 kann als längliche, im aufgeblasenen Zustand des Gassackes 5 vertikal verlaufende Vertiefung (oder Durchgangsöffnung) ausgebildet sein; insbesondere, um bei Fahrzeuginsassen unterschiedlicher Größe wirksam zu sein (in Fig. 11F angedeutet durch die gestrichelten Kreise G1, G2).

Die Einbuchtung 5702 kann als nicht befüllbarer Durchgang ausgebildet sein, der sich durch den kompletten Gassack 5 hindurch erstreckt. Denkbar ist jedoch auch, dass sich die Einbuchtung 5702 als nicht befüllbarer Abschnitt vom Fahrzeuginsassen aus betrachtet nur über einen Teil der Dicke des Kopfbereichs 570 (zwischen den seitlichen Kopfkammern 571, 572) erstreckt. Im dargestellten Ausführungsbeispiel ist die Einbuchtung 5702 von Abschnitten des Kopfbereichs 570 und des Thoraxbereiches 580 ringförmig umgeben. Wie oben bereits erwähnt, kann in der Einbuchtung 5702 ein (zum Beispiel flächiges) Element angeordnet sein, das die Einbuchtung 5702 zumindest teilweise verschließt und Abschnitte des Gassacks 5, die an die Einbuchtung 5702 angrenzen, miteinander verbindet, wodurch ein Aufspreizen der Einbuchtung 5702 beim Eintauchen des Kopfes des Fahrzeuginsassen begrenzt werden kann.

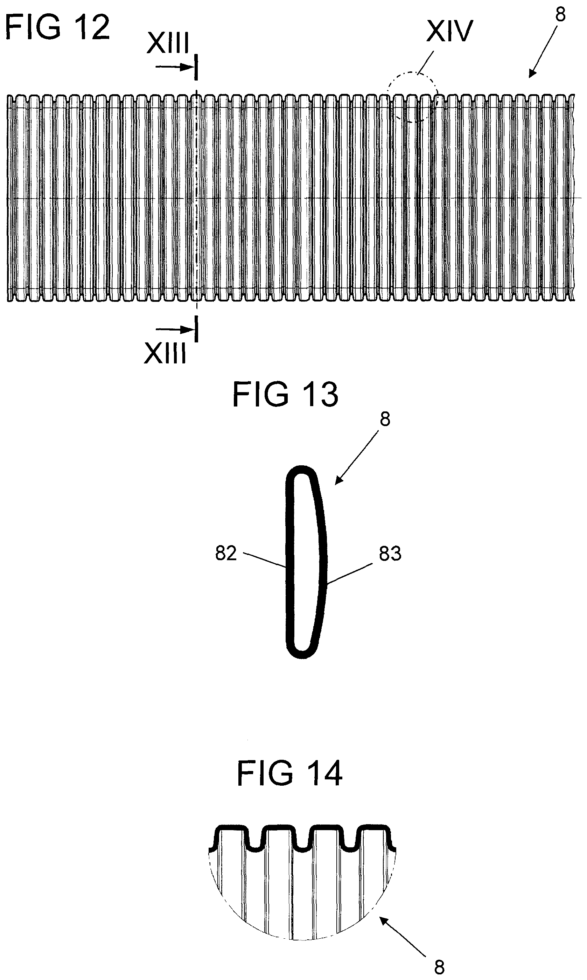

In Fig. 12 ist eine gegenüber der Fig. 7 abgewandelte Ausführung des Hüllelementes 8 dargestellt. Im Vergleich mit Fig. 7 besitzt das Hüllelement 8 zumindest abschnittsweise eine wellenförmige Struktur (entlang des Verlaufs des Sicherheitsgurtes betrachtet), die deutlich stärker gewellt ist, d.h. eine geringere Wellenlänge und/oder eine größere Amplitude aufweist. Entsprechend ist der Abstand zwischen benachbarten Wellentälern oder Wellenbergen der Struktur geringer; z.B. kleiner als 10 mm. Die wellenförmige Struktur ist insbesondere in dem in Figur 14 dargestellten vergrößerten Ausschnitt (mit "XIV" gekennzeichneter Ausschnitt in Figur 12) zu erkennen. Beispielsweise ist das Hüllelementes 8 nach Art eines Wellschlauchs ausgebildet.

Des Weiteren ist die dem Fahrzeuginsassen zugewandte Seite 82 des Hüllelements 8 zumindest annähernd eben ausgeführt, während seine dem Fahrzeuginsassen abgewandte Seite 83 konvex verläuft; vgl. Fig. 13, die einen Schnitt entlang XIII-XIII in Figur 12 zeigt. Die wellenförmige Struktur und die konkave bzw. plane Kontur des Hüllelements 8 können die Anpassung des Hüllelementes 8 an die Körperkontur des Fahrzeuginsassen im angelegten Zustand des Sicherheitsgurtes 11 verbessern.

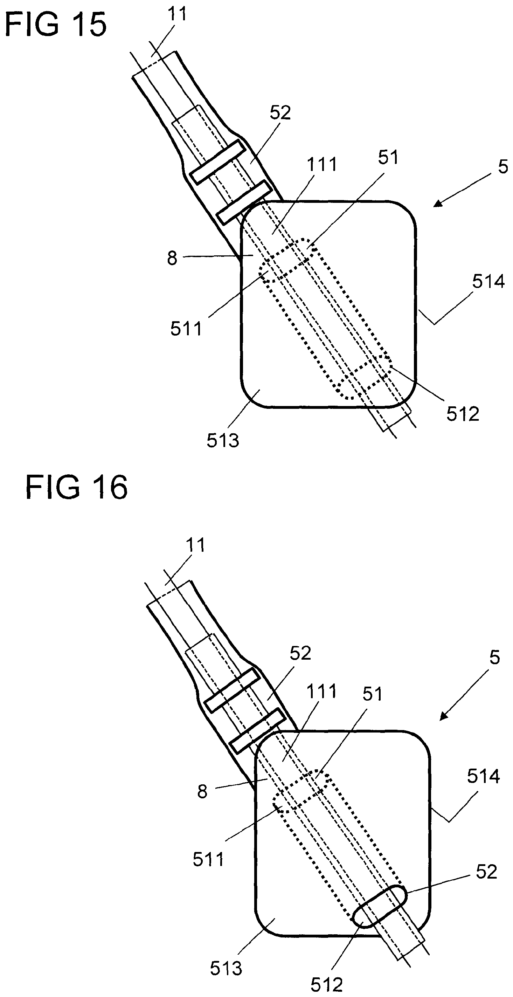

Figur 15 betrifft eine erste Abwandlung der Sicherheitsgurtanordnung 1 aus Figur 6. Anders als in Figur 6 befinden sich die erste Öffnung 511, über die der Sicherheitsgurt 11 in den Durchgang 51 eintritt, und die zweite Öffnung 512, über die der Sicherheitsgurt 11 aus dem Durchgang 51 austritt, in ein und derselben Materiallage (Gassacklage) des Gassacks 5; nämlich in der in dem Fahrzeuginsassen zugewandten Gassacklage 514. Denkbar ist natürlich auch, dass sich die Öffnungen 511, 512 in der dem Fahrzeuginsassen abgewandten Gassacklage 513 befinden.

In Figur 16 ist eine alternative Abwandlung der Sicherheitsgurtanordnung 1 gezeigt. Danach befinden sich die beiden Öffnungen 511, 512 in unterschiedlichen Lagen des Gassacks 5. So ist die erste Öffnung 511 in der dem Fahrzeuginsassen zugewandten Gassacklage 514 ausgebildet, während sich die zweite Öffnung 512 in der dem Fahrzeuginsassen abgewandten Gassacklage 513 befindet. Denkbar ist natürlich auch, dass sich umgekehrt die erste Öffnung 511 in der dem Fahrzeuginsassen abgewandten Gassacklage 513 befindet und die zweite Öffnung in der dem Fahrzeuginsassen zugewandten Gassacklage 514.

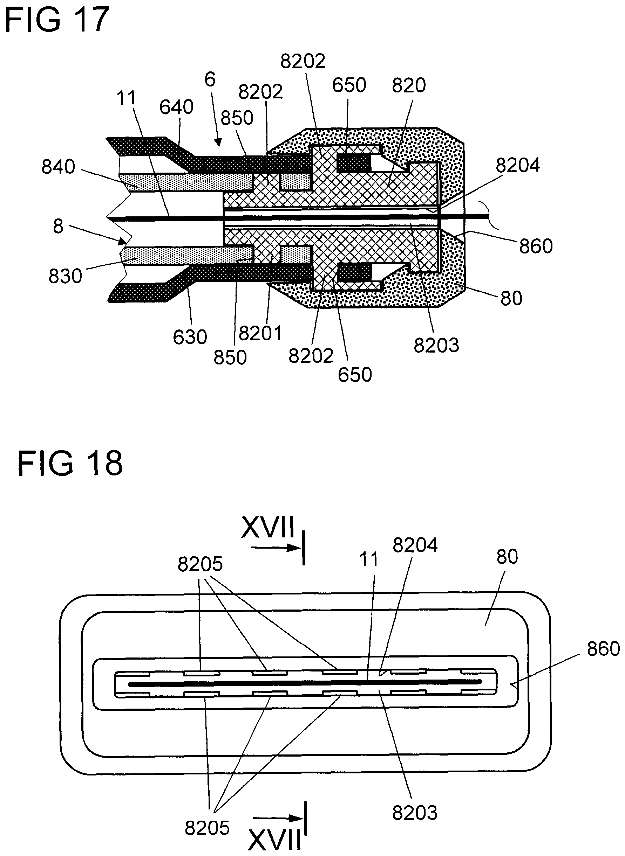

Die Figuren 17 und 18 betreffen eine gegenüber der Figur 7 abgewandelte Ausführung der Anbindung der Sicherheitsgurtanordnung 1 an den Sicherheitsgurt 11 an ihrem dem Fixierelement 9 (vgl. Fig. 7) abgewandten Ende, wobei die Anbindung in Fig. 17 im Schnitt und in Fig. 18 in einer Seitenansicht zu sehen ist.

Im Unterschied zum Verbindungselement 811 der Fig. 7 nimmt das Verbindungselement 820 der Figuren 17 und 18 jeweils zwei Abschnitte 830, 840 des Hüllelements 8 und zwei Abschnitte 630, 640 der äußeren Umhüllung 6 auf, so dass das Verbindungselement 820 sowohl für eine Verbindung des ersten Abschnitts 830 des Hüllelements 8 mit dem ersten Abschnitt 630 der äußeren Umhüllung 6 als auch für eine Verbindung des zweiten Abschnitts 840 des Hüllelements 8 mit dem zweiten Abschnitt 640 der äußeren Umhüllung 6 sorgt.

Für die Kopplung mit dem Verbindungelement 820 sind das Hüllelement 8 und die äußere Umhüllung 6 mit Durchbrüchen (Öffnungen) 850, 650 versehen, die bei der Montage mit entsprechenden Vorsprüngen 8201 und Haken 8202 des Verbindungelements 820 in Eingriff gebracht werden.

Anschließend wird ein äußeres Abdeckelement 80 mit dem Verbindungelement 820 verrastet, wobei sichtbare Komponenten (z.B. die Vorsprünge 8201 und Haken 8202) des Verbindungelements 820 abgedeckt werden (Designfunktion). Gleichzeitig sichert das Abdeckelement 80 die Verbindung der äußeren Umhüllung 6 und des Hüllelements 8 mit dem Verbindungelement 820 gegen Wiederlösen. Denkbar ist auch, dass das Abdeckelement 80 die Umhüllung 6 und das Hüllelement 8 gegen einen Abschnitt (z.B. einer Außenseite) des Verbindungselements 820 drückt. Das Abdeckelement 80 ist z.B. aus Metall oder einem Kunststoff (z.B. per Spritzguss) gefertigt. Das Abdeckelement 80 weist insbesondere eine (z.B. nicht symmetrische) Kontur auf, mit der ein Verhaken mit der Kleidung des Fahrzeuginsassen möglichst vermieden wird.

Das Verbindungelement 820 ist darüber hinaus mit einer schlitzförmigen Durchgangsöffnung 8203 versehen in der der Sicherheitsgurt 11 verläuft. Das Abdeckelement 80 weist eine sich der Durchgangsöffnung 8203 anschließende Öffnung 860 auf, wobei der Sicherheitsgurt 11 sowohl durch die Öffnung 8203 als auch durch die Öffnung 860 hindurch verläuft. Zur Minimierung der Reibung zwischen dem Verbindungelement 820 und dem Sicherheitsgurt 11 kann eine an die Durchgangsöffnung 8203 angrenzende Wandung 8204 des Verbindungelements 820 mit (z.B. streifenförmigen) Vorsprüngen 8205 versehen sein, deren Verlaufsrichtung beispielsweise identisch mit der Verlaufsrichtung des Sicherheitsgurtes 11 ist; vgl. auch die Fig. 18. Analog zu den Vorsprüngen 8205 der Durchgangsöffnung 8203 können natürlich auch in der Durchgangsöffnung 92 des Fixierelements 9 (vgl. Fig. 7) Vorsprünge vorhanden sein.

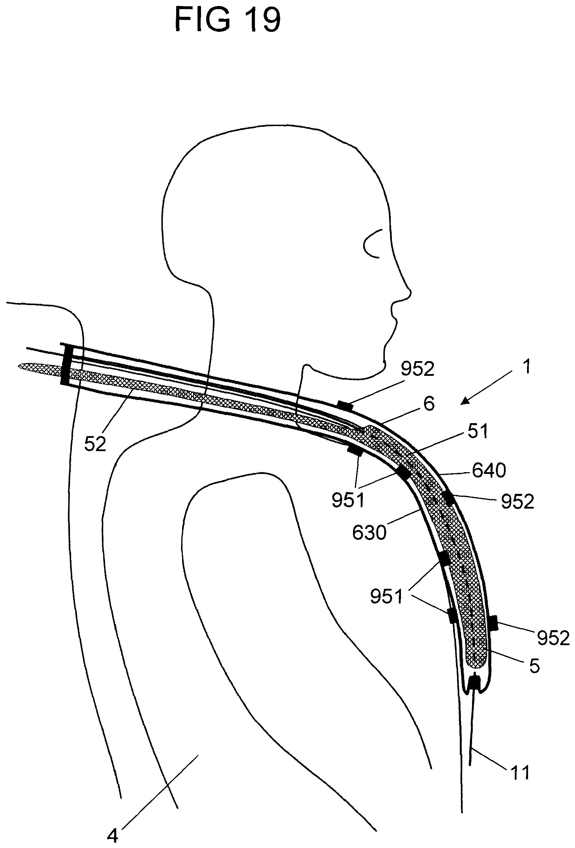

Fig. 19 betrifft einen weiteren Aspekt der Erfindung, wonach an der äußeren Umhüllung 6 der Sicherheitsgurtanordnung 1 mehrere Sensoren 951, 952 zum Erfassen von Vitaldaten des Fahrzeuginsassen und/oder mindestens einer Umgebungsgröße. angeordnet sind.

Die Sensoren 951, 952 können sich an unterschiedlichen Einbaupositionen an der äußeren Umhüllung 6 befinden. Beispielsweise sind die Sensoren 951 an einem ersten, dem Fahrzeuginsassen 4 zugewandten Abschnitt 630 der äußeren Umhüllung 6 platziert, wobei zwei dieser Sensoren 951 an einer Außenseite des Abschnitts 630 und die anderen beiden der Sensoren 951 an einer Innenseite des Abschnitts 630 angeordnet sind. Die Sensoren 952 befinden sich hingegen an einem zweiten, dem Fahrzeuginsassen 4 abgewandten Abschnitt 640 der äußeren Umhüllung 6, wobei zwei dieser Sensoren an einer Außenseite und einer der Sensoren an einer Innenseite des Abschnitts 640 angebracht ist.

Die Erfindung ist natürlich nicht auf eine bestimmte Anzahl von Sensoren oder bestimmte Einbaupositionen beschränkt. Vielmehr wird die Anzahl der Sensoren und ihre Position durch ihren vorgesehen Zweck bestimmt. Beispielsweise können die an dem dem Fahrzeuginsassen 4 zugewandten Abschnitt 630 der äußeren Umhüllung 6 angeordneten Sensoren 951 zur Bestimmung einer Herzrate, von Parametern in Bezug auf die Atmung, der Temperatur und einer Bewegung des Fahrzeuginsassen 4 dienen. Unter den an dem Fahrzeuginsassen 4 abgewandten Abschnitt 640 angeordneten Sensoren 952 befinden sich z.B. Sensoren zum Bestimmen von Bestandteilen der Atemluft des Fahrzeuginsassen 4, ein Mikrofon und/oder Sensoren (z.B. in Form einer Kamera) zum Beobachten der Umgebung des Fahrzeuginsassen 4.

Damit die Sensoren 951, 952 auch noch nach einem Fahrzeugcrash ihre Funktion erfüllen kann, kann die Sicherheitsgurtanordnung 1 Vorrichtungen aufweisen, die die Energieversorgung während und nach einer Vorverlagerung des Fahrzeuginsassen sicherstellen. Beispielsweise kann eine elektrische Leitung, über die der Sensor mit einer Fahrzeugelektronik verbindbar ist, vorhanden sein, wobei die elektrische Leitung eine Zusatzlänge aufweisen kann, die bei einem Auszug des Sicherheitsgurtes das Mitbewegen des Gassacks mit dem Sicherheitsgurt ermöglicht, ohne dass es zu einer Unterbrechung der elektrischen Verbindung zwischen dem Sensor und der Fahrzeugelektronik kommt. Die elektrische Leitung kann dabei sowohl innerhalb als auch außerhalb der äußeren Umhüllung 6 auf die Oberfläche des die äußere Umhüllung 6 bildenden flexiblen Materials aufgebracht (beispielsweise auflaminiert) werden, bzw. die elektrische Leitung verläuft innerhalb des flexiblen Materials, beispielsweise als eingewebtes Element bei der Verwendung einer aus Gewebe bestehenden äußeren Umhüllung 6.

Möglich ist wie oben bereits erwähnt auch, dass die Sicherheitsgurtanordnung 1 einen Energiespeicher zum Speichern von elektrischer Energie aufweist, der zur elektrischen Versorgung des mindestens einen Sensors dient und/oder ein Funkmodul umfassen, mit dem sich zum Beispiel Sensordaten drahtlos an einen Empfänger übertragen lassen. Die oben erwähnten Signalgeber können analog zu den Sensoren 951, 952 angeordnet sein.

Es könnte der Gassack der Figuren 1 bis 5 nach dem Vorbild des in den Figuren 11A bis 11F dargestellten Gassacks ausgebildet sein.

## Patentansprüche

1. Sicherheitsgurtanordnung für ein Kraftfahrzeug, mit
- mindestens einem Sicherheitsgurt (11) zum Schutz eines auf einem Fahrzeugsitz befindlichen Fahrzeuginsassen (4);
- mindestens einem an dem Sicherheitsgurt (11) angeordneten, zum Schutz des Fahrzeuginsassen (4) aufblasbaren Gassack (5),
**dadurch gekennzeichnet, dass**
der Gassack (5) einen Durchgang (51) aufweist, durch den sich der Sicherheitsgurt (11) hindurch erstreckt und an den mindestens eine aufblasbare Kammer (53) des Gassacks (5) angrenzt, wobei bei oder nach einem Aufblasen des Gassacks (5) zumindest ein Teilabschnitt einer Wandung des Durchgangs (51) mittelbar und/oder unmittelbar so gegen den Sicherheitsgurt (11) drückt, dass der Gassack (5) an den Sicherheitsgurt (11) ankoppelt und einer Auszugsbewegung des Sicherheitsgurtes (11) und damit einer Bewegung des Fahrzeuginsassen (4) folgt, und wobei der Sicherheitsgurt (11) zumindest innerhalb des Durchgangs (51) zumindest teilweise von einem Hüllelement (8) umgeben ist.

2. Sicherheitsgurtanordnung nach Anspruch 1, **dadurch gekennzeichnet, dass** die Wandung des Durchgangs (51) durch ein flexibles Element (510) ausgebildet ist, das sich zumindest teilweise durch die Kammer (53) hindurch erstreckt oder an die Kammer (53) angrenzt, wobei insbesondere das flexible Element (510) mit mindestens einer Materiallage (540) der Kammer (53), die das aufblasbare Volumen (530) der Kammer (53) begrenzt, verbunden ist, wobei insbesondere in der Materiallage (540) eine Öffnung (520) ausgebildet ist, wobei das flexible Element (510) im Bereich der Öffnung (520) so mit der Materiallage (540) verbunden ist, dass die Öffnung (520) einen Zugang zu dem Durchgang (51) bildet.

3. Sicherheitsgurtanordnung nach Anspruch 2, **dadurch gekennzeichnet, dass** das aufblasbare Volumen (530) der Kammer (53) durch zwei, über eine Randnaht miteinander verbundene Materiallagen begrenzt ist, wobei zwischen den Materiallagen eine Öffnung ausgebildet ist und das flexible Element (510) derart mittels der Randnaht und/oder eines Fortsatzes der Randnaht an zumindest einer der Materiallage befestigt ist, dass die Öffnung einen Zugang zu dem Durchgang (51) bildet.

4. Sicherheitsgurtanordnung nach einem der vorhergehenden Ansprüche, **dadurch gekennzeichnet, dass** das Hüllelement (8) mit einer inneren, reibungsmindernden Beschichtung versehen ist und / oder das Hüllelement (8) zumindest abschnittsweise eine wellenförmige Struktur aufweist und / oder eine dem Fahrzeuginsassen (4) abgewandte Seite des Hüllelements (8) konvex verläuft.

5. Sicherheitsgurtanordnung nach einem der vorhergehenden Ansprüche, **dadurch gekennzeichnet, dass** ein erstes Ende des Durchgangs (51) an eine erste Öffnung (511) des Gassacks (5) und ein zweites Ende des Durchgangs (51) an eine zweite Öffnung (512) des Gassacks (5) angrenzt, wobei der Sicherheitsgurt (11) über die erste Öffnung (511) in den Durchgang (51) ein- und aus der zweiten Öffnung (512) aus dem Durchgang (51) austritt, wobei insbesondere die erste und die zweite Öffnung (511, 512) in derselben oder in unterschiedlichen Gassacklagen (513, 514) des Gassacks (5) ausgebildet sind.

6. Sicherheitsgurtanordnung nach einem der vorhergehenden Ansprüche, **gekennzeichnet durch** ein Fixierelement (9), über das der Gassack (5) an einer Komponente (3) eines Fahrzeugsitzes (21) befestigbar ist.

7. Sicherheitsgurtanordnung nach einem der vorhergehenden Ansprüche, **gekennzeichnet durch** eine äußere Umhüllung (6), die den Gassack (5) zumindest teilweise umgibt.

8. Sicherheitsgurtanordnung nach Anspruch 6 und 7, **dadurch gekennzeichnet, dass** die äußere Umhüllung (6) an dem Fixierelement (9) festgelegt ist.

9. Sicherheitsgurtanordnung nach Anspruch 7 oder 8, **gekennzeichnet durch** mindestens ein Verbindungselement (811, 820), mit dem die äußere Umhüllung (6) und das Hüllelement (8) miteinander verbunden sind.

10. Sicherheitsgurtanordnung nach einem der vorhergehenden Ansprüche, mit
- einem Gasgenerator (7) zum Aufblasen des Gassacks (5);
- einer Gaszuleitung (71), über die vom Gasgenerator (7) freigesetztes Gas in den Gassack (5) einleitbar ist, wobei
- der Gassack (5) auf ein Signal einer Pre-Crash oder Crash-Sensorik des Kraftfahrzeugs oder infolge eines Aufblasens an den Sicherheitsgurt (11) ankoppelt, so dass der Gassack (5) einer Auszugsbewegung des Sicherheitsgurtes (11) und damit einer Bewegung des Fahrzeuginsassen (4) folgt,
**dadurch gekennzeichnet, dass**
die Gaszuleitung (71) mit einem Einleitungsbereich (52) des Gassacks (5) so verbunden ist, dass sich der Einleitungsbereich (52) von einem Ende der Gaszuleitung (71) löst, wenn der Sicherheitsgurt (11) nach einem Ankoppeln des Gassacks (5) an den Sicherheitsgurt (11) um eine vorgebbare Auszugslänge ausgezogen wird.

11. Sicherheitsgurtanordnung nach Anspruch 10, **dadurch gekennzeichnet, dass** das Ende der Gaszuleitung (71) durch ein starres Endstück (710) ausgebildet ist.

12. Sicherheitsgurtanordnung nach Anspruch 10 oder 11, **dadurch gekennzeichnet, dass**
- der Einleitungsbereich (52) des Gassacks (5) so ausgebildet ist, dass nach dem Ankoppeln des Gassacks (5) an den Sicherheitsgurt (11) bei einem Auszug des Sicherheitsgurtes (11) bis zum Erreichen der vorgebbaren Auszugslänge eine Einleitung von Gas über den Einleitungsbereich (52) erfolgt, wobei insbesondere der Einleitungsbereich (52) einen Abschnitt (521) aufweist, der eine Zusatzlänge bereitstellt, die bei einem Auszug des Sicherheitsgurtes (11) bis zum Erreichen der vorgebbaren Auszugslänge ein Entfernen einer aufblasbaren Kammer (53) von der Gaszuleitung (71) ermöglicht, ohne dass es zu einer Unterbrechung der Gaseinleitung in die Kammer (53) kommt, und / oder
- die Sicherheitsgurtanordnung ein Ventil aufweist, das bei einem Ablösen des Einleitungsbereichs (52) von dem Ende der Gaszuleitung (71) einem Ausströmen von Gas aus dem Gassack (5) entgegenwirkt.

13. Sicherheitsgurtanordnung nach einem der vorhergehenden Ansprüche, **dadurch gekennzeichnet, dass** der Gassack (5) einen sich oberhalb eines Thoraxbereiches (580) erstreckenden Kopfbereich (570) aufweist, wobei der Kopfbereich (570) mindestens eine Einbuchtung (5702) aufweist.

14. Sicherheitsgurtanordnung nach einem der vorhergehenden Ansprüche, mit
- einer äußeren Umhüllung (6), die den Gassack (5) zumindest teilweise umgibt, wobei
- der Gassack (5) auf ein Signal einer Pre-Crash oder Crash-Sensorik des Kraftfahrzeugs oder infolge eines Aufblasens an den Sicherheitsgurt (11) ankoppelt, so dass der Gassack (5) einer Auszugsbewegung des Sicherheitsgurtes (11) und damit einer Bewegung des Fahrzeuginsassen (4) folgt,
**gekennzeichnet durch**
mindestens einen an der äußeren Umhüllung (6) angeordneten Sensor (951, 952) zum Erfassen von Vitaldaten des Fahrzeuginsassen (4) und/oder mindestens einer Umgebungsgröße und/oder eines Signalgebers.

15. Kraftfahrzeug mit einer Sicherheitsgurtanordnung (1) nach einem der vorhergehenden Ansprüche.

## Claims

1. Seat belt assembly for a motor vehicle, comprising
- at least one seat belt (11) intended to protect a vehicle occupant (4) located on a vehicle seat;
- at least one airbag (5) arranged on the seat belt (11), which can be inflated to protect the vehicle occupant (4),
**characterized in that**
the airbag (5) has a passage (51) through which the seat belt (11) extends, and which adjoins at least one inflatable chamber (53) of the airbag (5), wherein when the airbag (5) is inflated or after the airbag has been inflated, at least one partial section of a wall of the passage (51) indirectly and/or directly exerts pressure against the seat belt (11) in such a manner that the airbag (5) couples to the seat belt (11) and follows a extraction movement of the seat belt (11) and thus a movement of the vehicle occupant (4), and wherein the seat belt (11) is at least partially surrounded by an enveloping element (8) at least inside the passage (51).

2. Seat belt assembly according to claim 1, **characterized in that** the wall of the passage (51) is formed by a flexible element (510), which extends at least partially through the chamber (53) from one side to the other or adjoins the chamber (53), wherein in particular the flexible element (510) is connected to at least one material layer (540) of the chamber (53), which delimits the inflatable volume (530) of the chamber (53), wherein in particular an opening (520) is formed in the material layer (540), wherein the flexible element (510) is connected to the material layer (540) in the region of the opening (520) in such a manner that the opening (520) forms an access to the passage (51).

3. Seat belt assembly according to claim 2, **characterized in that** the inflatable volume (530) of the chamber (53) is delimited by two material layers connected to one another by means of an edge seam, wherein an opening is formed between the material layers and the flexible element (510) is fastened to at least one of the material layers by means of the edge seam and/or an extension of the edge seam in such a manner that the opening forms an access to the passage (51).

4. Seat belt assembly according to any one of the preceding claims, **characterized in that** the enveloping element (8) is provided with an inner coating that reduces friction and/or the enveloping element (8) has a corrugated structure at least in sections and/or a side of the enveloping element (8) facing away from the vehicle occupant (4) extends in a convex manner.

5. Seat belt assembly according to any one of the preceding claims, **characterized in that** a first end of the passage (51) adjoins a first opening (511) of the airbag (5) and a second end of the passage (51) adjoins a second opening (512) of the airbag (5), wherein the seat belt (11) enters the passage (51) via the first opening (511) and exits the passage (51) via the second opening (512), wherein in particular the first and second openings (511, 512) are formed in the same airbag layers or in different airbag layers (513, 514) of the airbag (5).

6. Seat belt assembly according to any one of the preceding claims, **characterized by** a fixing element (9), by means of which the airbag (5) can be fastened to a component (3) of a vehicle seat (21).

7. Seat belt assembly according to any one of the preceding claims, **characterized by** an outer envelope (6), which at least partially surrounds the airbag (5).

8. Seat belt assembly according to claims 6 and 7, **characterized in that** the outer envelope (6) is fastened to the fixing element (9).

9. Seat belt assembly according to claim 7 or 8, **characterized by** at least one connecting element (811, 820), by means of which the outer envelope (6) and the enveloping element (8) are connected to one another.

10. Seat belt assembly according to any one of the preceding claims, comprising
- a gas generator (7) intended to inflate the airbag (5);
- a gas supply line (71), by means of which gas released by the gas generator (7) can be conveyed into the airbag (5), wherein
- the airbag (5) couples to the seat belt (11) upon receipt of a signal from a pre-collision or collision detection system of the motor vehicle or as a result of inflation in such a manner that the airbag (5) follows an extraction movement of the seat belt (11) and thus a movement of the vehicle occupant (4),
**characterized in that**
the gas supply line (71) is connected to an introduction region (52) of the airbag (5) in such a manner that the introduction region (52) detaches from an end of the gas supply line (71) when the seat belt (11) is extracted by a specifiable extraction length after coupling of the airbag (5) to the seat belt (11).

11. Seat belt assembly according to claim 10, **characterized in that** the end of the gas supply line (71) is formed by a rigid nozzle (710).

12. Seat belt assembly according to claim 10 or 11, **characterized in that**
- the introduction region (52) of the airbag (5) is configured in such a manner that, after coupling of the airbag (5) to the seat belt (11), gas introduction is carried out via the introduction region (52) during an extraction of the seat belt (11) until the specifiable extraction length is reached, wherein in particular the introduction region (52) has a section (521) that provides an additional length which allows an inflatable chamber (53) to be withdrawn from the gas supply line (71) during extraction of the seat belt (11) until the specifiable extraction length is reached without causing an interruption of the gas introduction into the chamber (53), and/or
- the seat belt assembly has a valve which counteracts a flow of gas out of the airbag (5) when the introduction region (52) is detached from the end of the gas supply line (71).

13. Seat belt assembly according to any one of the preceding claims, **characterized in that** the airbag (5) has a head region (570) extending above the thorax region (580), wherein the head region (570) has at least one indentation (5702).

14. Seat belt assembly according to any one of the preceding claims, comprising
- an outer envelope (6), which at least partially surrounds the airbag (5), wherein
- the airbag (5) couples to the seat belt (11) upon receipt of a signal from a pre-collision or collision detection system of the motor vehicle or as a result of inflation in such a manner that the airbag (5) follows an extraction movement of the seat belt (11) and thus a movement of the vehicle occupant (4),
**characterized by**
at least one sensor (951, 952) arranged on the outer envelope (6), intended to detect vital data of the vehicle occupant (4) and/or an environmental parameter and/or a signal transmitter.

15. Motor vehicle with a seat belt assembly (1) according to any one of the preceding claims.

## Revendications

1. Ensemble de ceinture de sécurité pour un véhicule à moteur, avec
- au moins une ceinture de sécurité (11) destinée à protéger un passager de véhicule (4) se trouvant sur un siège de véhicule ;
- au moins un coussin gonflable (5) disposé sur la ceinture de sécurité (11), pouvant être gonflé pour protéger le passager de véhicule (4),
**caractérisé en ce que**
le coussin gonflable (5) présente un passage (51), à travers lequel la ceinture de sécurité (11) s'étend et qu'au moins une chambre (53) pouvant être gonflée du coussin gonflable (5) jouxte, dans lequel lorsque le coussin gonflable (5) est gonflé ou après que le coussin gonflable est gonflé, au moins une section partielle d'une paroi du passage (51) exerce indirectement et/ou directement une pression contre la ceinture de sécurité (11) de telle sorte que le coussin gonflable (5) s'accouple à la ceinture de sécurité (11) et suit un mouvement d'extraction de la ceinture de sécurité (11) et ainsi un mouvement du passager de véhicule (4), et dans lequel la ceinture de sécurité (11) est entourée au moins en partie d'un élément enveloppant (8) au moins à l'intérieur du passage (51).

2. Ensemble de ceinture de sécurité selon la revendication 1, **caractérisé en ce que** la paroi du passage (51) est réalisée par un élément flexible (510), qui s'étend au moins en partie à travers la chambre (53) ou qui jouxte la chambre (53), dans lequel en particulier l'élément flexible (510) est relié à au moins une couche de matériau (540) de la chambre (53), qui délimite le volume (530) pouvant être gonflé de la chambre (53), dans lequel en particulier une ouverture (520) est réalisée dans la couche de matériau (540), dans lequel l'élément flexible (510) est relié dans la zone de l'ouverture (520) de telle sorte à la couche de matériau (540) que l'ouverture (520) forme un accès au passage (51).

3. Ensemble de ceinture de sécurité selon la revendication 2, **caractérisé en ce que** le volume (530) pouvant être gonflé de la chambre (53) est délimité par deux couches de matériau reliées l'une à l'autre par l'intermédiaire d'une couture de bord, dans lequel une ouverture est réalisée entre les couches de matériau et l'élément flexible (510) est fixé sur au moins une des couches de matériau au moyen de la couture de bord et/ou d'un prolongement de la couture de bord de telle manière que l'ouverture forme un accès au passage (51).

4. Ensemble de ceinture de sécurité selon l'une quelconque des revendications précédentes, **caractérisé en ce que** l'élément enveloppant (8) est pourvu d'un revêtement intérieur réduisant le frottement et/ou l'élément enveloppant (8) présente au moins partiellement une structure ondulée et/ou un côté de l'élément enveloppant (8) opposé au passager de véhicule (4) s'étend de manière convexe.

5. Ensemble de ceinture de sécurité selon l'une quelconque des revendications précédentes, **caractérisé en ce qu'**une première extrémité du passage (51) jouxte une première ouverture (511) du coussin gonflable (5) et une deuxième extrémité du passage (51) jouxte une deuxième ouverture (512) du coussin gonflable (5), dans lequel la ceinture de sécurité (11) entre dans le passage (51) par l'intermédiaire de la première ouverture (511) et sort hors du passage (51) depuis la deuxième ouverture (512), dans lequel en particulier la première et la deuxième ouverture (511, 512) sont réalisées dans les mêmes couches de coussin gonflable ou dans des couches de coussin gonflable (513, 514) différentes du coussin gonflable (5).

6. Ensemble de ceinture de sécurité selon l'une quelconque des revendications précédentes, **caractérisé par** un élément de blocage (9), par l'intermédiaire duquel le coussin gonflable (5) peut être fixé sur un composant (3) d'un siège de véhicule (21).

7. Ensemble de ceinture de sécurité selon l'une quelconque des revendications précédentes, **caractérisé par** une enveloppe extérieure (6), qui entoure au moins en partie le coussin gonflable (5).

8. Ensemble de ceinture de sécurité selon la revendication 6 et 7, **caractérisé en ce que** l'enveloppe extérieure (6) est fixée sur l'élément de blocage (9).

9. Ensemble de ceinture de sécurité selon la revendication 7 ou 8, **caractérisé par** au moins un élément de liaison (811, 820), par lequel l'enveloppe extérieure (6) et l'élément enveloppant (8) sont reliés l'un à l'autre.

10. Ensemble de ceinture de sécurité selon l'une quelconque des revendications précédentes, avec
- un générateur de gaz (7) destiné à gonfler le coussin gonflable (5) ;
- une conduite d'arrivée de gaz (71), par l'intermédiaire de laquelle le gaz libéré par le générateur de gaz (7) peut être acheminé dans le coussin gonflable (5), dans lequel
- le coussin gonflable (5) s'accouple à la ceinture de sécurité (11) à réception d'un signal d'un système de détection de précollision ou de collision du véhicule à moteur ou suite à un gonflage de telle sorte que le coussin gonflable (5) suit un mouvement d'extraction de la ceinture de sécurité (11) et ainsi un mouvement du passager de véhicule (4),
**caractérisé en ce que**
la conduite d'arrivée de gaz (71) est reliée à une zone d'introduction (52) du coussin gonflable (5) de telle sorte que la zone d'introduction (52) se détache d'une extrémité de la conduite d'arrivée de gaz (71) lorsque la ceinture de sécurité (11) est extraite d'une longueur d'extraction pouvant être spécifiée après l'accouplement du coussin gonflable (5) à la ceinture de sécurité (11).

11. Ensemble de ceinture de sécurité selon la revendication 10, **caractérisé en ce que** l'extrémité de la conduite d'arrivée de gaz (71) est réalisée par un embout (710) rigide.

12. Ensemble de ceinture de sécurité selon la revendication 10 ou 11, **caractérisé en ce que**
- la zone d'introduction (52) du coussin gonflable (5) est réalisée de telle sorte qu'après l'accouplement du coussin gonflable (5) à la ceinture de sécurité (11), une introduction de gaz est effectuée par l'intermédiaire de la zone d'introduction (52) lors d'une extraction de la ceinture de sécurité (11) jusqu'à atteindre la longueur d'extraction pouvant être spécifiée, dans lequel en particulier la zone d'introduction (52) présente une section (521), qui fournit une longueur supplémentaire, qui permet de retirer une chambre (53) pouvant être gonflée de la conduite d'arrivée de gaz (71) lors d'une extraction de la ceinture de sécurité (11) jusqu'à atteindre la longueur d'extraction pouvant être spécifiée sans que cela n'entraîne une interruption de l'introduction de gaz dans la chambre (53), et/ou
- l'ensemble de ceinture de sécurité présente une soupape, qui contrecarre un écoulement sortant de gaz hors du coussin gonflable (5) lorsque la zone d'introduction (52) est détachée de l'extrémité de la conduite d'arrivée de gaz (71).

13. Ensemble de ceinture de sécurité selon l'une quelconque des revendications précédentes, **caractérisé en ce que** le coussin gonflable (5) présente une zone de tête (570) s'étendant au-dessus de la zone de thorax (580), dans lequel la zone de tête (570) présente au moins une indentation (5702).

14. Ensemble de ceinture de sécurité selon l'une quelconque des revendications précédentes, avec
- une enveloppe extérieure (6), qui entoure au moins en partie le coussin gonflable (5), dans lequel
- le coussin gonflable (5) s'accouple à la ceinture de sécurité (11) à réception d'un signal d'un système de détection de précollision ou de collision du véhicule à moteur ou suite à un gonflage de telle sorte que le coussin gonflable (5) suit un mouvement d'extraction de la ceinture de sécurité (11) et ainsi un mouvement du passager de véhicule (4),
**caractérisé par**
au moins un capteur (951, 952) disposé sur l'enveloppe extérieure (6), destiné à détecter des données vitales du passager de véhicule (4) et/ou une grandeur d'environnement et/ou d'un transmetteur de signal.

15. Véhicule à moteur avec un ensemble de ceinture de sécurité (1) selon l'une quelconque des revendications précédentes.
